# EUROPEAN PATENT APPLICATION

(11) **EP 3 989 515 A1**
(43) Date of publication of application: **27.04.2022**
(21) Application number: 21203623.0
(22) Date of filing: 20.10.2021
(51) Int. Cl.: H04L 47/56, H04L 47/62, H04L 47/6295, H04L 45/12, H04L 45/745, H04L 47/2408

(54) **PACKET PROCESSING METHOD AND APPARATUS, AND COMMUNICATIONS DEVICE**

(30) Priority: 20.10.2020 CN 202011126181
(71) Applicant: Huawei Technologies Co., Ltd., Shenzhen, Guangdong 518129 (CN)
(72) Inventor: HOU, Jie, Shenzhen, 518129 (CN); SONG, Yuezhong, Shenzhen, 518129 (CN); LI, Lei, Shenzhen, 518129 (CN); WANG, Xiaozhong, Shenzhen, 518129 (CN)
(74) Representative: Pfenning, Meinig & Partner mbB

(57) **Abstract**

Embodiments of this application provide a packet processing method and apparatus, and a communications device. The method includes the following steps: After obtaining first network cost information of a received first packet, a network device may determine a first queue for the first packet based on the first network cost information, and buffer the first packet to the first queue, where the first network cost information is used to indicate a cost for transmitting the first packet to an egress node. Therefore, the network device considers costs for transmitting packets to the egress node, divides queues based on values of the costs that are indicated, and performs differentiated enqueuing operations on the received packets considering the values of the costs.

## Description

### TECHNICAL FIELD

This application relates to the field of communications technologies, and in particular, to a packet processing method and apparatus, and a communications device.

### BACKGROUND

In a process of packet forwarding by a network device, a traffic management (English: Traffic Management, TM for short) module of the network device manages to-be-forwarded traffic. Generally, the TM module sets a plurality of queues for buffering packets for traffic of a same outbound interface, and allocates packets of a same type of service to a same queue based on the type of service of the packets. However, for packets whose transmission paths differ greatly, a manner of performing enqueuing processing on the packets by the network device based on types of services of the packets cannot ensure that transmission of all the packets meets network performance requirements of the packets.

### SUMMARY

Embodiments of this application provide a packet processing method and apparatus, and a communications device, to buffer a packet to a corresponding queue with reference to a cost for transmitting the packet to an egress node, so that processing of different packets by a network device can meet network performance requirements of the packets and that proper resource scheduling is implemented.

According to a first aspect, an embodiment of this application provides a packet processing method. The method, for example, may include the following steps: A network device obtains first network cost information of a received first packet, where the first network cost information is used to indicate a cost for transmitting the first packet to an egress node; and then the network device determines a first queue for the first packet based on the first network cost information, and buffers the first packet to the first queue. Because network cost information can reflect a cost for transmitting a packet to the egress node, the network device considers costs for transmitting packets to the egress node, divides queues based on values of the costs that are indicated, and performs differentiated enqueuing operations on the received packets considering the values of the costs, to buffer a packet with a relatively high cost to a queue with a relatively high outbound rate, and buffer a packet with a relatively low cost to a queue with a relatively low outbound rate. Therefore, proper resource scheduling can be implemented, and network performance requirements of the packets are met as far as possible.

The first network cost information is related to at least one piece of the following information: a delay in transmitting the first packet to the egress node, a bandwidth, or a packet loss rate.

In a possible implementation, the network device may trigger an implementation of the method when determining that congestion occurs, that is, perform a packet enqueuing operation based on the network cost information of the packet. That the network device determines that congestion occurs may mean that the network device finds that congestion occurs in a queue. In this way, resources can be allocated more properly, and a network performance requirement of each packet in a congestion state is met as far as possible.

In a possible implementation, the network device may further determine, with reference to both first type of service information of the first packet and the first network cost information, the first queue that the first packet needs to enter. In a specific implementation, the network device may further obtain the first type of service information of the first packet, where the first type of service information is used to indicate that the first packet belongs to a first type of service; and that the network device determines a first queue for the first packet based on the first network cost information may include: the network device determines the first queue for the first packet based on the first type of service information and the first network cost information. In one case, the first type of service information may include a differentiated services code point (English: differentiated services code point, DSCP for short) value of the first packet. In another case, the first type of service information may include a DSCP value and a user identifier corresponding to the first packet. In this way, the network device can determine, based on the network cost information and the type of service information of the packet, the queue corresponding to the to-be-forwarded packet, and buffer the to-be-forwarded packet to the determined queue. Therefore, a queue corresponding to each type of service can be divided with reference to a cost for transmitting a packet to the egress node. The network device performs differentiated enqueuing operations on packets of a same type of service considering values of costs, to buffer a packet with a relatively high cost to a queue with a relatively high outbound rate corresponding to the type of service, and buffer a packet with a relatively low cost to a queue with a relatively low outbound rate corresponding to the type of service. Therefore, proper resource scheduling can be implemented for different packets of each type of service based on different network costs, and network performance requirements of the packets are met as far as possible.

In a possible implementation, that a network device obtains first network cost information of a first packet may include: the network device determines a first routing entry based on a destination address of the first packet, where the first routing entry includes a first routing prefix and a first metric (metric) of a first path from the network device to the egress node, and the destination address of the first packet matches the first routing prefix; and the network device obtains the first network cost information based on the first metric in the first routing entry. In an example, when the first network cost information is the first metric, that the network device determines a first queue for the first packet based on the first network cost information may specifically include: if determining that the first metric is greater than a first threshold, the network device determines the first queue for the first packet, where the first queue corresponds to the first threshold. In another example, when the first network cost information is a first cost level corresponding to the first metric, that the network device determines a first queue for the first packet based on the first network cost information may specifically include: the network device determines, for the first packet based on the first cost level, the first queue corresponding to the first cost level.

In a possible implementation, that a network device obtains first network cost information of a first packet may include: the network device determines a first routing entry based on a destination address of the first packet, where the first routing entry includes a first routing prefix and a first cost level corresponding to a first metric (metric) of a first path from the network device to the egress node, and the destination address of the first packet matches the first routing prefix; and the network device obtains the first network cost information based on the first cost level in the first routing entry. In an example, the first network cost information is the first cost level corresponding to the first metric, and that the network device determines a first queue for the first packet based on the first network cost information may specifically include: the network device determines the first queue for the first packet based on the first cost level, where the first queue corresponds to the first cost level.

In a possible implementation, when the network device is an intermediate node through which the first packet is transmitted, that a network device obtains first network cost information of a first packet may include: the network device obtains a second metric from the first packet, where the second metric is a metric of a second path through which the first packet is transmitted from an ingress node to the network device; the network device determines a first routing entry in a routing table based on a destination address of the first packet, where the first routing entry includes a first routing prefix and a first metric of a first path from the network device to the egress node, and the destination address of the first packet matches the first routing prefix; and the network device obtains the first network cost information based on the second metric and the first metric. In an example, the first network cost information is a third metric, the third metric is a sum of the first metric and the second metric, and that the network device determines a first queue for the first packet based on the first network cost information may specifically include: if determining that the third metric is greater than a second threshold, the network device determines the first queue for the first packet, where the first queue corresponds to the second threshold. In another example, the first network cost information is a second cost level corresponding to a third metric, the third metric is a sum of the first metric and the second metric, and that the network device determines a first queue for the first packet based on the first network cost information may specifically include: the network device determines the first queue for the first packet based on the second cost level, where the first queue corresponds to the second cost level. In this implementation, when the first packet is dequeued from the first queue, the network device may further update the second metric in the first packet to a fourth metric to obtain a third packet, where the fourth metric is a metric of a third path through which the first packet is transmitted from the ingress node to a next-hop node of the network device; and sends the third packet to the next-hop node of the network device. Alternatively, when the first packet is dequeued from the first queue to enter a next-hop node, and before the next-hop node performs an enqueuing operation on the first packet, the second metric in the first packet is first updated to a fourth metric, where the fourth metric is a metric of a third path through which the first packet is transmitted from the ingress node to the next-hop node of the network device. In comparison with the second metric, a metric of a link between the network device and the next-hop node is added to the fourth metric. Therefore, the network device can perform the enqueuing operation more accurately, and schedule resources more properly. In addition, for a case in which a packet transmission path is relatively long in a network, a network device close to the egress node of the packet obtains, by using this implementation, the network cost information corresponding to the packet. Therefore, it can be more effectively ensured that a network performance requirement of the packet is met.

In a possible implementation, that a network device obtains first network cost information of a first packet may include: the network device obtains a fifth metric from the first packet, where the fifth metric is a metric corresponding to a fourth path from an ingress node of the first packet to the egress node of the first packet, and the fifth metric is added to the first packet by the ingress node of the first packet; and the network device obtains the first network cost information based on the fifth metric. In an example, the first network cost information is the fifth metric, and that the network device determines a first queue for the first packet based on the first network cost information may specifically include: if determining that the fifth metric is greater than a third threshold, the network device determines the first queue for the first packet, where the first queue corresponds to the third threshold. In another example, the first network cost information is a third cost level corresponding to the fifth metric, and that the network device determines a first queue for the first packet based on the first network cost information may specifically include: the network device determines the first queue for the first packet based on the third cost level, where the first queue corresponds to the third cost level.

In a possible implementation, that a network device obtains first network cost information of a first packet may include: the network device obtains a third cost level from the first packet, where the third cost level corresponds to a metric corresponding to a fourth path from an ingress node of the first packet to the egress node of the first packet, and the third cost level is added to the first packet by the ingress node of the first packet; and the network device obtains the first network cost information based on the third cost level. The first network cost information is the third cost level, and that the network device determines a first queue for the first packet based on the first network cost information may specifically include: the network device determines the first queue for the first packet based on the third cost level, where the first queue corresponds to the third cost level.

In a possible implementation, that a network device obtains first network cost information of a first packet may include: the network device obtains, from the first packet, a quantity of devices included in a fourth path from an ingress node of the first packet to the egress node of the first packet, where the quantity of devices is added to the first packet by the ingress node of the first packet; and the network device obtains the first network cost information based on the quantity of devices. In an example, the first network cost information is the quantity of devices, and that the network device determines a first queue for the first packet based on the first network cost information may specifically include: if determining that the quantity of devices is greater than a fourth threshold, the network device determines the first queue for the first packet, where the first queue corresponds to the fourth threshold. In another example, the first network cost information is a fourth cost level corresponding to the quantity of devices, and that the network device determines a first queue for the first packet based on the first network cost information may specifically include: the network device determines the first queue for the first packet based on the fourth cost level, where the first queue corresponds to the fourth cost level.

In a possible implementation, that a network device obtains first network cost information of a first packet may include: the network device obtains a fourth cost level from the first packet, where the fourth cost level corresponds to a quantity of devices included in a fourth path from an ingress node of the first packet to the egress node of the first packet, and the fourth cost level is added to the first packet by the ingress node of the first packet; and the network device obtains the first network cost information based on the fourth cost level. The first network cost information is the fourth cost level, and that the network device determines a first queue for the first packet based on the first network cost information may specifically include: the network device determines the first queue for the first packet based on the fourth cost level, where the first queue corresponds to the fourth cost level.

The ingress node may add any piece of the following information to a packet header or a hop by hop (English: HBH for short) header of the first packet: the fifth metric corresponding to the fourth path, the third cost level corresponding to the fifth metric, the quantity of devices included in the fourth path, or the fourth cost level corresponding to the quantity of devices. For example, the first packet may carry the fifth metric by using a TLV field extended in the packet header or the HBH header. It should be noted that, in this implementation, information that can reflect a cost consumed on the fourth path passed through from the ingress node of the first packet to the egress node is added to the packet at the ingress node, and each intermediate node only needs to perform an enqueuing operation based on content carried in the first packet, without modifying a routing entry, thereby simplifying packet processing of each intermediate node, and improving packet forwarding efficiency.

In a possible implementation, the method may further include the following steps: The network device obtains second network cost information of a second packet, where the second network cost information is used to indicate a cost for transmitting the second packet to an egress node, and the first packet and the second packet belong to the same type of service; the network device determines a second queue for the second packet based on the second network cost information, where the first queue and the second queue correspond to the same type of service; and the network device buffers the second packet to the second queue, where when the cost for transmitting the first packet to the egress node is higher than the cost for transmitting the second packet to the egress node, an outbound rate of the first queue is higher than an outbound rate of the second queue; or when the cost for transmitting the first packet to the egress node is lower than the cost for transmitting the second packet to the egress node, an outbound rate of the first queue is lower than an outbound rate of the second queue. It can be learned that in this implementation, the queue corresponding to each type of service can be divided with reference to the cost for transmitting the packet to the egress node and the type of service of the packet, and when the received packet is processed, a packet with a relatively high cost can be buffered to a queue with a relatively high outbound rate corresponding to the type of service, and a packet with a relatively low cost can be buffered to a queue with a relatively low outbound rate corresponding to the type of service. Therefore, proper resource scheduling can be implemented for different packets of each type of service based on different network costs, and it is possible to meet network performance requirements of the packets.

According to a second aspect, an embodiment of this application further provides a packet processing apparatus, where the apparatus is applied to a network device, and the apparatus may include a first obtaining unit, a first determining unit, and a first buffering unit. The first obtaining unit is configured to obtain first network cost information of a first packet, where the first network cost information is used to indicate a cost for transmitting the first packet to an egress node. The first determining unit is configured to determine a first queue for the first packet based on the first network cost information. The first buffering unit is configured to buffer the first packet to the first queue.

In a possible implementation, the apparatus further includes a second determining unit. The second determining unit is configured to: before the first network cost information of the first packet is obtained, determine that congestion occurs.

In a possible implementation, the apparatus further includes a second obtaining unit. The second obtaining unit is configured to obtain first type of service information of the first packet, where the first type of service information is used to indicate that the first packet belongs to a first type of service. The first determining unit is specifically configured to determine the first queue for the first packet based on the first type of service information and the first network cost information.

In a possible implementation, the first type of service information includes a DSCP value of the first packet.

In a possible implementation, the first type of service information includes a DSCP value of the first packet and a user identifier corresponding to the first packet.

In a possible implementation, the first obtaining unit may include a first determining subunit and a first obtaining subunit. The first determining subunit is configured to determine a first routing entry based on a destination address of the first packet, where the first routing entry includes a first routing prefix and a first metric (metric) of a first path from the network device to the egress node, and the destination address of the first packet matches the first routing prefix. The first obtaining subunit is configured to obtain the first network cost information based on the first metric in the first routing entry.

In an example, the first network cost information is the first metric, and the first determining unit is specifically configured to: if determining that the first metric is greater than a first threshold, determine the first queue for the first packet, where the first queue corresponds to the first threshold.

In a possible implementation, the first obtaining unit may include a second determining subunit and a second obtaining subunit. The second determining subunit is configured to determine a first routing entry based on a destination address of the first packet, where the first routing entry includes a first routing prefix and a first cost level corresponding to a first metric (metric) of a first path from the network device to the egress node, and the destination address of the first packet matches the first routing prefix. The second obtaining subunit is configured to obtain the first network cost information based on the first cost level in the first routing entry.

In an example, the first network cost information is the first cost level corresponding to the first metric, and the first determining unit is specifically configured to determine the first queue for the first packet based on the first cost level, where the first queue corresponds to the first cost level.

In a possible implementation, the network device is an intermediate node through which the first packet is transmitted, and the first obtaining unit may include a third obtaining subunit, a third determining subunit, and a fourth obtaining subunit. The third obtaining subunit is configured to obtain a second metric from the first packet, where the second metric is a metric of a second path through which the first packet is transmitted from an ingress node to the network device. The third determining subunit is configured to determine a first routing entry in a routing table based on a destination address of the first packet, where the first routing entry includes a first routing prefix and a first metric of a first path from the network device to the egress node, and the destination address of the first packet matches the first routing prefix. The fourth obtaining subunit is configured to obtain the first network cost information based on the second metric and the first metric.

In an example, the first network cost information is a third metric, the third metric is a sum of the first metric and the second metric, and the first determining unit is specifically configured to: if determining that the third metric is greater than a second threshold, determine the first queue for the first packet, where the first queue corresponds to the second threshold.

In another example, the first network cost information is a second cost level corresponding to a third metric, the third metric is a sum of the first metric and the second metric, and the first determining unit is specifically configured to determine the first queue for the first packet based on the second cost level, where the first queue corresponds to the second cost level.

In this implementation, the apparatus may further include an updating unit and a sending unit. The updating unit is configured to: when the first packet is dequeued from the first queue, update the second metric in the first packet to a fourth metric to obtain a third packet, where the fourth metric is a metric of a third path through which the first packet is transmitted from the ingress node to a next-hop node of the network device. The sending unit is configured to send the third packet to the next-hop node of the network device.

In a possible implementation, the first obtaining unit may include a fifth obtaining subunit and a sixth obtaining subunit. The fifth obtaining subunit is configured to obtain a fifth metric from the first packet, where the fifth metric is a metric corresponding to a fourth path from an ingress node of the first packet to the egress node of the first packet, and the fifth metric is added to the first packet by the ingress node of the first packet. The sixth obtaining subunit is configured to obtain the first network cost information based on the fifth metric.

In an example, the first network cost information is the fifth metric, and the first determining unit is specifically configured to: if determining that the fifth metric is greater than a third threshold, determine the first queue for the first packet, where the first queue corresponds to the third threshold.

In another example, the first network cost information is a third cost level corresponding to the fifth metric, and the first determining unit is specifically configured to determine the first queue for the first packet based on the third cost level, where the first queue corresponds to the third cost level.

In a possible implementation, the first obtaining unit may include a seventh obtaining subunit and an eighth obtaining subunit. The seventh obtaining subunit is configured to obtain a third cost level from the first packet, where the third cost level corresponds to a metric corresponding to a fourth path from an ingress node of the first packet to the egress node of the first packet, and the third cost level is added to the first packet by the ingress node of the first packet. The eighth obtaining subunit is configured to obtain the first network cost information based on the third cost level.

The first network cost information is the third cost level, and the first determining unit is specifically configured to determine the first queue for the first packet based on the third cost level, where the first queue corresponds to the third cost level.

In a possible implementation, the first obtaining unit may include a ninth obtaining subunit and a tenth obtaining subunit. The ninth obtaining subunit is configured to obtain, from the first packet, a quantity of devices included in a fourth path from an ingress node of the first packet to the egress node of the first packet, where the quantity of devices is added to the first packet by the ingress node of the first packet. The tenth obtaining subunit is configured to obtain the first network cost information based on the quantity of devices.

In an example, the first network cost information is the quantity of devices, and the first determining unit is specifically configured to: if determining that the quantity of devices is greater than a fourth threshold, determine the first queue for the first packet, where the first queue corresponds to the fourth threshold.

In another example, the first network cost information is a fourth cost level corresponding to the quantity of devices, and the first determining unit is specifically configured to determine the first queue for the first packet based on the fourth cost level, where the first queue corresponds to the fourth cost level.

In a possible implementation, the first obtaining unit may include an eleventh obtaining subunit and a twelfth obtaining subunit. The eleventh obtaining subunit is configured to obtain a fourth cost level from the first packet, where the fourth cost level corresponds to a quantity of devices included in a fourth path from an ingress node of the first packet to the egress node of the first packet, and the fourth cost level is added to the first packet by the ingress node of the first packet. The twelfth obtaining subunit is configured to obtain the first network cost information based on the fourth cost level.

In an example, the first network cost information is the fourth cost level, and the first determining unit is specifically configured to determine the first queue for the first packet based on the fourth cost level, where the first queue corresponds to the fourth cost level.

In a possible implementation, the apparatus may further include a third obtaining unit, a third determining unit, and a second buffering unit. The third obtaining unit is configured to obtain second network cost information of a second packet, where the second network cost information is used to indicate a cost for transmitting the second packet to an egress node, and the first packet and the second packet belong to the same type of service. The third determining unit is configured to determine a second queue for the second packet based on the second network cost information, where the first queue and the second queue correspond to the same type of service. The second buffering unit is configured to buffer the second packet to the second queue. When the cost for transmitting the first packet to the egress node is higher than the cost for transmitting the second packet to the egress node, an outbound rate of the first queue is higher than an outbound rate of the second queue; or when the cost for transmitting the first packet to the egress node is lower than the cost for transmitting the second packet to the egress node, an outbound rate of the first queue is lower than an outbound rate of the second queue.

The first network cost information is related to at least one piece of the following information: a delay in transmitting the first packet to the egress node, a bandwidth, or a packet loss rate.

It should be noted that the packet processing apparatus provided in the second aspect corresponds to the method provided in the first aspect. For a specific implementation and an effect achieved, refer to related descriptions of the method shown in the first aspect.

According to a third aspect, an embodiment of this application further provides a communications device. The device includes a processor and a memory, where the memory is configured to store instructions or a computer program; and the processor is configured to execute the instructions or the computer program in the memory, so that the communications device performs the method provided in the first aspect.

According to a fourth aspect, an embodiment of this application further provides a computer-readable storage medium, including instructions. When the instructions are run on a computer, the computer is enabled to perform the method provided in the first aspect.

According to a fifth aspect, this application further provides a computer program product, including a computer program or computer-readable instructions. When the computer program or the computer-readable instructions is/are run on a computer, the computer is enabled to perform the method provided in the first aspect.

### BRIEF DESCRIPTION OF DRAWINGS

To describe technical solutions in embodiments of this application more clearly, the following briefly describes the accompanying drawings required for describing the embodiments. It is clear that the accompanying drawings in the following description show merely some embodiments of this application, and a person of ordinary skill in the art may derive other drawings from these accompanying drawings.
FIG. 1 is a schematic diagram of a format of a network 10 according to an embodiment of this application;
FIG. 2a is a schematic diagram of a structure of a queue buffer in a network device 102 according to an embodiment of this application;
FIG. 2b is another schematic diagram of a structure of a queue buffer in a network device 102 according to an embodiment of this application;
FIG. 3 is a schematic flowchart of a packet processing method 100 according to an embodiment of this application;
FIG. 4 is a schematic flowchart of a packet processing method 200 according to an embodiment of this application;
FIG. 5 is a schematic diagram of a structure of a packet processing apparatus 500 according to an embodiment of this application;
FIG. 6 is a schematic diagram of a structure of a communications device 600 according to an embodiment of this application; and
FIG. 7 is a schematic diagram of a structure of a communications device 700 according to an embodiment of this application.

### DESCRIPTION OF EMBODIMENTS

A network device usually sets a plurality of queues for traffic of a same outbound interface, and each queue is used to buffer traffic corresponding to at least one type of service. In this way, a packet received by the network device can be buffered to a corresponding queue based on a type of service of the packet. Therefore, differentiated processing of packets can be performed by configuring a plurality of queues, and differentiated services are provided for traffic of different types of services.

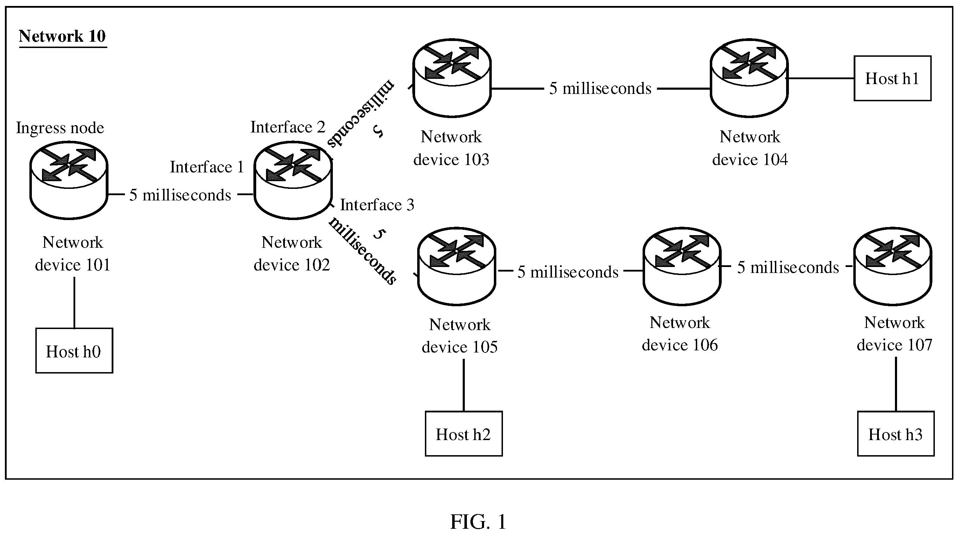

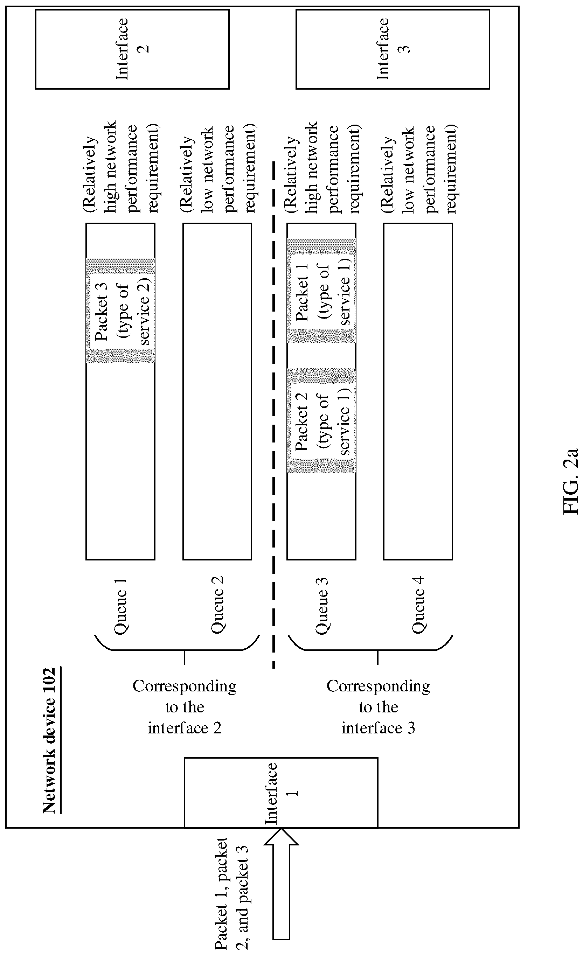

A network 10 shown in FIG. 1 is used as an example. It is assumed that the network 10 includes a network device 101 to a network device 107. The network device 101 is connected to an interface 1 of the network device 102. An interface 2 of the network device 102 is connected to the network device 104 by using the network device 103. An interface 3 of the network device 102 is connected to the network device 107 by using the network device 105 and the network device 106. The network device 101, the network device 104, the network device 105, and the network device 107 are respectively connected to hosts h1 to h3. The network device 102 is used as an example. If the host h0 sends a packet 1 to a packet 3 to the network device 102 by using the network device 101. The packet 1 needs to be sent to the network device 105 from the interface 3, and the network device 105 sends the packet 1 to the host h2. The packet 2 needs to be sent to the network device 105 from the interface 3, and is sent to the host h3 by using the network device 105, the network device 106, and the network device 107. The packet 3 needs to be sent to the network device 103 from the interface 2, and is sent to the host h1 by using the network device 103 and the network device 104. The network device 102 may set a queue 1 and a queue 2 corresponding to the interface 2, and a queue 3 and a queue 4 corresponding to the interface 3. The queue 1 and the queue 3 may be used to buffer a packet corresponding to a type of service that has a relatively high network performance requirement. The queue 2 and the queue 4 may be used to buffer a packet corresponding to a type of service that has a relatively low network performance requirement. In an example, for the received packets 1 to 3, the network device 102 determines that the packets 1 to 3 respectively belong to services 1 to 3, and that the service 1 and the service 2 belong to a type of service 1, and that the service 3 belongs to a type of service 2, where both the type of service 1 and the type of service 2 are types of services that have relatively high network performance requirements. Then for the packet 3 whose outbound interface is the interface 2, because the type of service 2 to which the packet 3 belongs is a type of service that has a relatively high network performance requirement, the network device 102 buffers the packet 3 to the queue 1 corresponding to the interface 2. Likewise, for the packet 1 and the packet 2 whose outbound interfaces are the interface 3, because the type of service 1 to which the packet 1 and the packet 2 belong is a type of service that has a relatively high network performance requirement, the network device 102 buffers the packet 1 and the packet 2 to the queue 3 corresponding to the interface 3, as specifically shown in FIG. 2a.

For packets of a same type of service, network performance requirements are usually the same. For example, maximum allowed delays in transmission of the packet 1 and the packet 2 are both 25 milliseconds. However, transmission paths of the packets of the same type of service are not completely the same. For example, a delay on each link segment in the network 10 is 5 milliseconds. Normally, if a queuing delay of a packet on each network device is ignored, a delay required for transmitting the packet 1 to h2 is 10 milliseconds, and a delay required for transmitting the packet 2 to h3 is 20 milliseconds, both of which meet the delay requirement. Once the queue 3 of the network device 102 is congested, queuing delays of both the packet 1 and the packet 2 in the queue 3 are 10 milliseconds, and a delay required for transmitting the packet 1 to h2 is (10 milliseconds + 10 milliseconds) = 20 milliseconds, which still meets the delay requirement. However, a delay required for transmitting the packet 2 to h3 is (20 ms + 10 ms) = 30 ms, which cannot meet the delay requirement.

It can be learned that network performance requirements (for example, delays) of the packets of the same type of service are the same, but the transmission paths of the packets of the same type of service in the network may be different. Therefore, the network device buffers the received packets of the same type of service to a same queue only based on the type of service to which the packets belong, without considering a difference between the transmission paths of the same type of service in queue buffering. Therefore, a network performance requirement of a packet with a relatively long transmission path may not be met.

Based on this, an embodiment of this application provides a packet processing method. A network device considers costs for transmitting packets to an egress node, and divides queues based on values of the costs that are indicated. In this way, when receiving a to-be-forwarded packet, the network device can determine, based on network cost information of the packet, a queue corresponding to the to-be-forwarded packet, and buffer the to-be-forwarded packet to the determined queue, where the network cost information is used to indicate a cost for transmitting the packet to the egress node. Because the network cost information can reflect the cost for transmitting the packet to the egress node, the network device performs differentiated enqueuing operations considering the values of the costs, to buffer a packet with a relatively high cost to a queue with a relatively high outbound rate, and buffer a packet with a relatively low cost to a queue with a relatively low outbound rate. Therefore, proper resource scheduling can be implemented, and network performance requirements of the packets are met as far as possible.

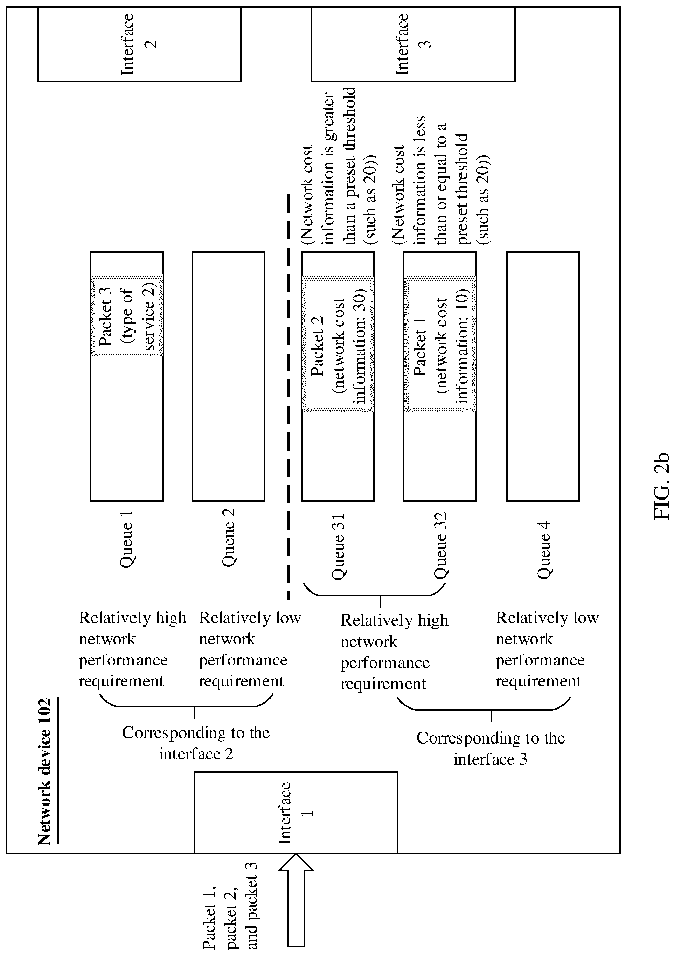

For example, the network 10 shown in FIG. 1 is still used as an example. The network device 102 may divide the queue 3 into a queue 31 and a queue 32, and buffer different packets corresponding to a type of service whose outbound interface is the interface 3 and whose network performance requirement is relatively high to different queues based on network cost information. For example, an enqueuing rule may be: if network cost information of a packet corresponding to the type of service 1 whose outbound interface is the interface 3 and whose network performance requirement is relatively high is greater than a preset threshold, buffering the packet to the queue 31; otherwise, buffering the packet to the queue 32. It should be noted that an outbound rate of the queue 31 should be higher than an outbound rate of the queue 32, to ensure that packet processing by the network device 102 can meet a network performance requirement of the packet. In an example, it is assumed that the network cost information is a metric (English: Metric) of a path from the network device 102 to the egress node, and that the preset threshold is 20. For a packet 1 and a packet 2 in FIG. 2a, a metric of a path 1 of the packet 1 from the network device 102 to the network device 105 is 10, and a metric of a path 2 of the packet 2 from the network device 102 to the network device 107 is 30. When receiving the packet 1 and the packet 2, the network device 102 may obtain network cost information 1 being 10 from the packet 1, and obtain network cost information 2 being 30 from the packet 2. Then the network device 102 compares the network cost information 1 with the preset threshold, and determines that the network cost information 1 is less than the preset threshold, thereby determining that the packet 1 should be buffered to the queue 32. Likewise, the network device 102 compares the network cost information 2 with the preset threshold, and determines that the network cost information 2 is greater than the preset threshold, thereby determining that the packet 2 should be buffered to the queue 31. Then the network device 102 separately buffers the packet 1 and the packet 2 to the queue 32 and the queue 31, as specifically shown in FIG. 2b.

Still, maximum allowed delays in transmission of the packet 1 and the packet 2 are both 25 milliseconds, the queue 31 and the queue 32 of the network device 102 are congested, and an average queuing delay is 10 milliseconds. The network device 102 may set a ratio of the outbound rate of the queue 31 to the outbound rate of the queue 32 to 3:1 (that is, the ratio of the outbound rate of the queue 31 to the outbound rate of the queue 32 is 3:1). In other words, a queuing delay of the queue 31 is 5 milliseconds, and a queuing delay of the queue 32 is 15 milliseconds. Therefore, a delay required for transmitting the packet 1 from the queue 32 to h2 is (10 milliseconds + 15 milliseconds) = 25 milliseconds, which meets a delay requirement; and a delay required for transmitting the packet 2 from the queue 31 to h3 is (20 ms + 5 ms) = 25 ms, which also meets the delay requirement. It can be learned that, by using the method provided in this embodiment of this application, the network device considers a difference between packet transmission paths, and performs a proper enqueuing operation on the packet based on the network cost information, to implement proper resource scheduling, and meet network performance requirements of different packets as far as possible.

It should be noted that the network device in this embodiment of this application may be any device that can provide a forwarding function, for example, may be a router, a switch, a forwarder, or a firewall. The egress node may be a network device connected to a host that receives the packet. The network device may include a traffic management (English: TM for short) module. The TM module is responsible for traffic management and control. In this embodiment of this application, the queue may be obtained after the TM module divides storage space of the TM module, and a packet enqueuing processing operation may be implemented by the TM module in the network device.

It may be understood that the foregoing scenario is merely an example of a scenario provided in this embodiment of this application, but this embodiment of this application is not limited to this scenario.

The following describes in detail a specific implementation of a packet processing method in an embodiment of this application by using an embodiment with reference to an accompanying drawing.

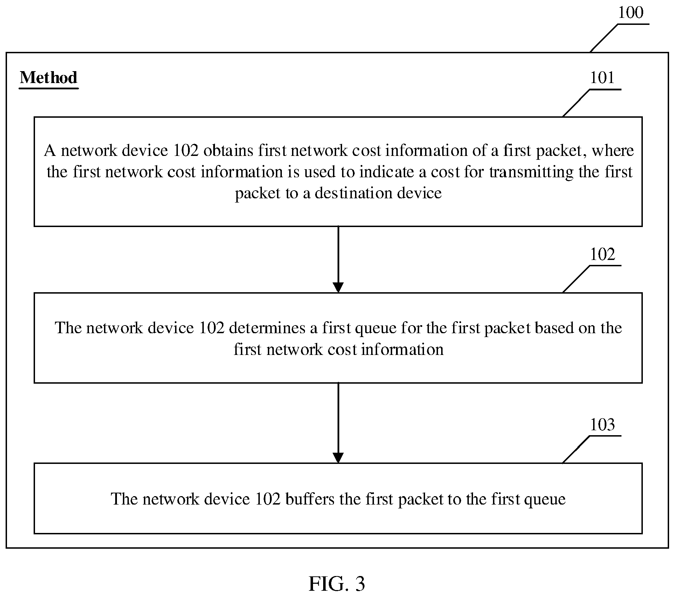

FIG. 3 is a schematic flowchart of a packet processing method 100 according to an embodiment of this application. Refer to FIG. 3. The method 100 is implemented by a network device. The network device may be specifically any network device in the network 10 shown in FIG. 1. In this embodiment of this application, an example in which the network device is the network device 102 in the network 10 is used for description. In a specific implementation, the method 100 may include, for example, the following S101 to S103.

S101: The network device 102 obtains first network cost information of a first packet, where the first network cost information is used to indicate a cost for transmitting the first packet to an egress node.

It should be noted that all or some network devices in the network may plan different queues based on network cost information. In the network devices that plan the queues based on the network cost information, quantities of the planned queues may be the same or different, and thresholds corresponding to the network cost information based on which the queues are planned may also be the same or different.

For a network device that plans a queue based on network cost information, in one case, the method 100 provided in this embodiment of this application may be performed on all received packets, to perform enqueuing operations based on network cost information of the packets. In another case, an implementation of the method 100 may also be triggered when the network device determines that congestion occurs, and an enqueuing operation is performed based on network cost information of a packet. When the network device does not detect congestion, enqueuing of the packet is guided based on a type of service of the packet. That the network device determines that congestion occurs may mean that the network device finds that congestion occurs in a queue. For example, in the network 10 shown in FIG. 1, when the network device 102 determines that congestion occurs in the queue 3, for an enqueuing processing operation performed by the network device 102 on the received first packet, refer to the method 100.

The network cost information in this embodiment of this application is used to indicate the cost for transmitting the packet received by the network device to the egress node of the packet. The cost is a comprehensive measurement indicator of packet transmission, and can reflect a difference in packet transmission processes. The network cost information is related to all of a physical distance of packet transmission, a transmission medium, a quantity of network devices through which the packet passes, and a scheduling configuration parameter of each network device through which the packet passes. The network cost information may be related to at least one piece of the following information: a delay in transmitting the packet to the egress node, a bandwidth, or a packet loss rate.

The first network cost information corresponding to the first packet received by the network device 102 may be any piece of the following information based on different queue planning manners and enqueuing operation rules: a first metric of a first path from the network device 102 to the egress node of the first packet, a first cost level corresponding to the first metric, a third metric (that is, a sum of the first metric and a second metric, where the second metric is a metric of a second path through which the first packet is transmitted from an ingress node to the network device 102), a second cost level corresponding to the third metric, a fifth metric (that is, a metric corresponding to a fourth path from the ingress node of the first packet to the egress node of the first packet), a third cost level corresponding to the fifth metric, a quantity of devices included in the fourth path from the ingress node of the first packet to the egress node of the first packet, or a fourth cost level corresponding to the quantity of devices. The following separately describes implementations of S101 when the parameters are used as the first network cost information.

In some possible implementations, the first network cost information may be related to the first metric corresponding to the first path from the network device 102 to the egress node of the first packet. It should be noted that, in a process of calculating a path from the network device 102 to the egress node, the network device 102 generates and stores a metric corresponding to each path. In this embodiment of this application, each metric may be used as a parameter of a corresponding routing entry. The network 10 shown in FIG. 1 is used as an example. A routing table 1 on the network device 102 may be shown in the following Table 1.

**Table 1 Routing table 1**

| Routing prefix (prefix) | Next hop (next hop) | Metric (metric) |
|---|---|---|
| h1 | Interface 2 | 20 |
| h2 | Interface 3 | 10 |
| h3 | Interface 3 | 30 |

In this implementation, S101 may specifically include: first, the network device 102 obtains a destination address of the first packet from the received first packet; then matches the destination address with a routing prefix in each routing entry in the routing table 1; then obtains a corresponding metric from a successfully matched routing entry as the first metric; and finally obtains the first network cost information based on the first metric.

In an example, the first network cost information may be the first metric itself. In one case, a queue planned by the network device 102 may correspond to a metric interval. For example, a first queue is used to buffer a packet whose first metric belongs to (0, 25], and a second queue is used to buffer a packet whose first metric belongs to (25, ∞]. In another case, the network device 102 may also plan a queue by using a preset threshold. For example, a first queue is used to buffer a packet whose first metric is less than or equal to 25, and a second queue is used to buffer a packet whose first metric is greater than 25.

In another example, the first network cost information may also be the first cost level corresponding to the first metric. To facilitate an enqueuing operation, the network device 102 may also define a cost level for the first metric in advance. For example, the network device 102 defines a low cost level for a first metric less than or equal to 25, and defines a high cost level for a first metric greater than 25. In one case, the network device 102 may obtain, based on the routing table 1, the first metric corresponding to the received first packet, then determine, based on the first metric and a preconfigured cost level definition manner, the first cost level corresponding to the first metric, and use the first cost level as the first network cost information of the first packet. In another case, the network device 102 may generate, in advance based on the routing table 1 and the cost level definition manner, a routing table 2 shown in the following Table 2.

**Table 2 Routing table 2**

| Routing prefix (prefix) | Next hop (next hop) | Cost level corresponding to the metric |
|---|---|---|
| h1 | Interface 2 | Low cost level |
| h2 | Interface 3 | Low cost level |
| h3 | Interface 3 | High cost level |

In comparison with the routing table 1, in the routing table 2, the metric in each routing entry is replaced with a corresponding cost level in the preconfigured cost level definition manner. Therefore, an implementation of S101 may include, for example: the network device 102 matches the destination address of the first packet with a routing prefix in each routing entry in the routing table 2, and obtains a corresponding cost level from a successfully matched routing entry as the first network cost information. In this example, a queue planned by the network device 102 may correspond to a cost level. For example, the first queue is used to buffer a packet at a low cost level, and the second queue is used to buffer a packet at a high cost level. It should be noted that two cost levels preconfigured by the network device 102 and the manner of defining the cost levels by using 25 as a preconfigured threshold are examples. A quantity of cost levels preconfigured by each network device and a manner of defining each cost level are not specifically illustrated in this embodiment of this application.

In other possible implementations, the first network cost information may be related to both the first metric and the second metric of the second path through which the first packet has passed. In this implementation, S101 may specifically include: first, the network device 102 obtains a destination address and the second metric of the first packet from the received first packet; then matches the destination address with a routing prefix in each routing entry in the routing table 1, and obtains the first metric from a matched successfully routing entry; and then obtains the first network cost information based on the first metric and the second metric.

In an example, the first network cost information may be the third metric, and the third metric is the sum of the first metric and the second metric. In this case, that the network device 102 obtains the first network cost information based on the first metric and the second metric may be specifically: the network device 102 calculates the sum of the first metric and the second metric to obtain the third metric, and uses the third metric as the first network cost information corresponding to the first packet.

In another example, the first network cost information may be the second cost level corresponding to the third metric, and the third metric is the sum of the first metric and the second metric. The network device 102 may also define a cost level for the third metric in advance. For example, the network device 102 defines a low cost level for a third metric less than or equal to 35, and defines a high cost level for a third metric greater than 35. That the network device 102 obtains the first network cost information based on the first metric and the second metric may be specifically: the network device 102 calculates the sum of the first metric and the second metric to obtain the third metric; and then determines, based on the third metric and the preconfigured cost level definition manner, the second cost level corresponding to the third metric, and uses the second cost level as the first network cost information corresponding to the first packet.

It should be noted that, for a case in which a packet transmission path is relatively long in the network, a network device close to the egress node of the packet obtains, by using this implementation, the network cost information corresponding to the packet. Therefore, it can be more effectively ensured that a network performance requirement of the packet is met. For example, when the network device 106 in the network 10 shown in FIG. 1 receives a packet destined for the host h3, if only a metric of a path from the network device 106 to the egress node is considered, because the metric is relatively small, the packet may be allocated to a queue with a relatively low outbound rate. However, because the packet has been transmitted over a long transmission path and may have encountered queue congestion, it is quite possible that the packet has consumed a high cost before arriving at the network device 106. Therefore, allocating the packet to a queue with a relatively low outbound rate by using network cost information determined by a metric of a remaining path may not meet the network performance requirement of the packet. If the metric of the path from the network device 106 to the egress node and the metric of the path through which the packet has passed when arriving at the network device 106 are comprehensively considered, the packet is allocated to a queue with a proper outbound rate based on network cost information determined by the two, so that the network performance requirement of the packet is met.

The second metric may be carried in a packet header or a hop by hop (English: hop by hop, HBH for short) header of the first packet. For example, in the first packet, the second metric may be carried by a type length value (English: type length value, TLV for short) extended in the packet header or the HBH header.

In still some possible implementations, the first network cost information may be related to a cost consumed on the fourth path passed through from the ingress node of the first packet to the egress node. The cost consumed on the fourth path passed through from the ingress node of the first packet to the egress node may be reflected by the fifth metric (or the third cost level corresponding to the fifth metric) corresponding to the fourth path passed through from the ingress node of the first packet to the egress node, and the fifth metric (or the third cost level) may be added to the first packet at the ingress node. Alternatively, the cost consumed on the fourth path passed through from the ingress node of the first packet to the egress node may be reflected by the quantity of devices (or the fourth cost level corresponding to the quantity of devices) included in the fourth path passed through from the ingress node of the first packet to the egress node, and the quantity of devices (or the fourth cost level) may be added to the first packet at the ingress node.

In this implementation, for example, the first network cost information is the fifth metric corresponding to the fourth path passed through from the ingress node of the first packet to the egress node. If the network device 102 is the ingress node of the first packet, the network device 102 may obtain the fifth metric of the fourth path through which the first packet is transmitted to the egress node, add the fifth metric to the first packet, and transmit the first packet that carries the fifth metric to the egress node through the fourth path. An intermediate node on the fourth path may perform an enqueuing operation on the first packet based on the fifth metric in the first packet, or when determining that congestion occurs, an intermediate node on the fourth path may perform an enqueuing operation on the first packet based on the fifth metric in the first packet. If the network device 102 is an intermediate node through which the first packet passes, the network device 102 may directly obtain the fifth metric from the first packet, use the fifth metric as the first network cost information, and process the first packet according to this embodiment of this application. In the following description, it is assumed that the network device 102 is an intermediate node on the fourth path for transmitting the first packet.

In an example, when the first network cost information is the fifth metric, the ingress node adds the fifth metric to the first packet. S101 may specifically include: the network device 102 obtains the fifth metric from the received first packet, and uses the fifth metric as the first network cost information.

In another example, when the first network cost information is the third cost level corresponding to the fifth metric, in one case, the ingress node adds the fifth metric to the first packet. S101 may specifically include: the network device 102 obtains the fifth metric from the received first packet, maps the fifth metric to the third cost level based on the local cost level definition manner, and uses the third cost level as the first network cost information. In another case, the ingress node determines, based on the fifth metric of the first packet and the cost level definition manner, the third cost level corresponding to the fifth metric, and adds the third cost level to the first packet. S101 may specifically include: the network device 102 obtains the third cost level from the received first packet, and uses the third cost level as the first network cost information.

In another example, when the first network cost information is the quantity of devices included in the fourth path, the ingress node adds the quantity of devices to the first packet. S101 may specifically include: the network device 102 obtains the quantity of devices from the received first packet, and uses the quantity of devices as the first network cost information.

In another example, when the first network cost information is the fourth cost level corresponding to the quantity of devices included in the fourth path, in one case, the ingress node adds the quantity of devices to the first packet. S101 may specifically include: the network device 102 obtains the quantity of devices from the received first packet, maps the quantity of devices to the fourth cost level based on the local cost level definition manner, and uses the fourth cost level as the first network cost information. In another case, the ingress node determines, based on the quantity of devices included in the fourth path from the ingress node of the first packet to the egress node of the first packet and the cost level definition manner, the fourth cost level corresponding to the quantity of devices included in the fourth path, and adds the fourth cost level to the first packet. S101 may specifically include: the network device 102 obtains the fourth cost level from the received first packet, and uses the fourth cost level as the first network cost information.

The ingress node may add any piece of the following information to the packet header or the HBH header of the first packet: the fifth metric corresponding to the fourth path, the third cost level corresponding to the fifth metric, the quantity of devices included in the fourth path, or the fourth cost level corresponding to the quantity of devices. For example, the first packet may carry the fifth metric by using the TLV field extended in the packet header or the HBH header.

It should be noted that, in this implementation, information that can reflect the cost consumed on the fourth path passed through from the ingress node of the first packet to the egress node is added to the packet at the ingress node, and each intermediate node only needs to perform an enqueuing operation based on content carried in the first packet, without modifying a routing entry, thereby simplifying packet processing of each intermediate node, and improving packet forwarding efficiency.

It should be noted that, in the foregoing several possible implementations, if the cost level is used as the first network cost information, resources consumed by table lookup or matching when each network device performs an enqueuing operation on the first packet can be effectively saved, and packet processing efficiency is improved. The cost level definition manner may be establishing a preconfigured mapping relationship between the metric (or quantity of devices) and the cost level, and the corresponding cost level is determined based on the mapping relationship and the known metric (or quantity of devices). For different examples, the mapping relationship may be different.

The network device 102 obtains, by performing S101, the first network cost information corresponding to the first packet, to prepare for performing subsequent S102 and S103, so that it is possible to properly schedule a resource for the first packet.

S102: The network device 102 determines a first queue for the first packet based on the first network cost information.

In a specific implementation, a TM module in the network device 102 prestores at least one queue and an enqueuing condition of each queue. In this case, when receiving the first packet and obtaining the first network cost information of the first packet, the network device 102 determines whether the first network cost information matches the enqueuing condition of each queue, and determines a queue corresponding to a successfully matched enqueuing condition as the queue for buffering the first packet. For example, the first network cost information is the first metric. An enqueuing condition of a queue 1 of the network device 102 is that the first metric is less than or equal to 25, and an enqueuing condition of a queue 2 is that the first metric is greater than 25. When the first metric of the first packet obtained by the network device 102 is 10, the first queue determined in S102 is the queue 1 in the network device 102. When the first metric of the first packet obtained by the network device 102 is 30, the first queue determined in S102 is the queue 2 in the network device 102.

In an example, when the first network cost information is the first metric, S102 may include, for example: the network device 102 determines that the first metric is greater than a first threshold, and determines the first queue for the first packet, where an enqueuing condition of the first queue that is preset in the network device 102 is: the first metric is greater than the first threshold, or in other words, the first queue corresponds to the first threshold. Alternatively, S102 may also include: the network device 102 determines the first cost level corresponding to the first metric, and determines, for the first packet, the first queue corresponding to the first cost level, where an enqueuing condition of the first queue that is preset in the network device 102 is: the first queue corresponds to the first cost level.

In another example, when the first network cost information is the first cost level corresponding to the first metric, S102 may include, for example: the network device 102 determines the first queue for the first packet based on the first cost level, where an enqueuing condition of the first queue that is preset in the network device 102 is: the first queue corresponds to the first cost level.

In another example, when the first network cost information is the third metric, S102 may include, for example: the network device 102 determines that the third metric is greater than a second threshold, and determines the first queue for the first packet, where an enqueuing condition of the first queue that is preset in the network device 102 is: the third metric is greater than the second threshold, or in other words, the first queue corresponds to the second threshold. Alternatively, S102 may also include: the network device 102 determines the second cost level corresponding to the third metric, and determines, for the first packet, the first queue corresponding to the second cost level, where an enqueuing condition of the first queue that is preset in the network device 102 is: the first queue corresponds to the second cost level.

In another example, when the first network cost information is the second cost level corresponding to the third metric, S102 may include, for example: the network device 102 determines the first queue for the first packet based on the second cost level, where an enqueuing condition of the first queue that is preset in the network device 102 is: the first queue corresponds to the second cost level.

In another example, when the first network cost information is the fifth metric, S102 may include, for example: the network device 102 determines that the fifth metric is greater than a third threshold, and determines the first queue for the first packet, where an enqueuing condition of the first queue that is preset in the network device 102 is: the fifth metric is greater than the third threshold, or in other words, the first queue corresponds to the third threshold. Alternatively, S102 may also include: the network device 102 determines the third cost level corresponding to the fifth metric, and determines, for the first packet, the first queue corresponding to the third cost level, where an enqueuing condition of the first queue that is preset in the network device 102 is: the first queue corresponds to the third cost level.

In another example, when the first network cost information is the third cost level corresponding to the fifth metric, S102 may include, for example: the network device 102 determines the first queue for the first packet based on the third cost level, where an enqueuing condition of the first queue that is preset in the network device 102 is: the first queue corresponds to the third cost level.

In another example, when the first network cost information is the quantity of devices included in the fourth path, S102 may include, for example: the network device 102 determines that the quantity of devices is greater than a fourth threshold, and determines the first queue for the first packet, where an enqueuing condition of the first queue that is preset in the network device 102 is: the quantity of devices is greater than the fourth threshold, or in other words, the first queue corresponds to the fourth threshold. Alternatively, S102 may also include: the network device 102 determines the fourth cost level corresponding to the quantity of devices included in the fourth path, and determines, for the first packet, the first queue corresponding to the fourth cost level, where an enqueuing condition of the first queue that is preset in the network device 102 is: the first queue corresponds to the fourth cost level.

In another example, when the first network cost information is the fourth cost level corresponding to the quantity of devices included in the fourth path, S102 may include, for example: the network device 102 determines the first queue for the first packet based on the fourth cost level, where an enqueuing condition of the first queue that is preset in the network device 102 is: the first queue corresponds to the fourth cost level.

When the first network cost information is the third metric or the second cost level corresponding to the third metric, the first packet needs to carry a metric of a path that has been passed through in a transmission process, and the metric needs to be continuously updated with forwarding of the first packet. For example, the first packet received by the network device 102 carries the second metric. The second metric may be the metric of the second path through which the first packet has passed when the first packet is transmitted from the ingress node to the network device 102. In one case, when a dequeuing operation is performed on the first packet in the network device 102, a metric of a path from the network device 102 to a next-hop node (for example, the network device 105) may be obtained, a sum of the metric and the second metric is calculated as a fourth metric of a third path through which the first packet has passed during transmission from the ingress node to the network device 105, to update the second metric in the first packet to the fourth metric and obtain a third packet, and the third packet is sent to the network device 105, so that the network device 105 performs an enqueuing operation on the third packet based on the fourth metric in the third packet. In another case, when the first packet is forwarded to a next-hop node (for example, the network device 105) after a dequeuing operation is performed on the first packet in the network device 102, the network device 105 may obtain a metric of a path from the network device 102 to the network device 105 before performing an enqueuing operation, and calculate a sum of the metric and the second metric as a fourth metric of a third path through which the first packet has passed during transmission from the ingress node to the network device 105, to update the second metric in the first packet to the fourth metric and obtain a third packet. Then the network device 105 performs an enqueuing operation on the third packet based on the fourth metric in the third packet. It should be noted that updating the metric of the path through which the packet has passed in the packet by each network device may be specifically performed by a network processor (English: processor network, NP for short) in the network device.

It should be noted that the network device 102 may also configure a corresponding committed traffic rate (English: committed information rate, CIR for short) for each queue, to ensure a requirement of a packet buffered in a corresponding queue on an outbound rate of the queue. In addition, corresponding peak traffic rates (English: peak information rate, PIR for short) may also be configured for different queues, to limit a maximum rate that can be supported by the corresponding queue. Alternatively, the PIR may not be set additionally, and a default value is used. A specific value of the CIR or specific values of the CIR and the PIR need to be set to be applicable to a chip of the network device.

S103: The network device 102 buffers the first packet to the first queue.

In a specific implementation, after S102, the TM module in the network device 102 may buffer the first packet to the first queue, and wait to perform dequeuing processing based on a preset queue scheduling rule. The preset queue scheduling rule may be, for example, any one of the following scheduling rules: strict priority scheduling (English: Strict Priority, SP for short), round robin scheduling (English: Round-Robin, RR for short), or weighted round-robin scheduling (English: Weighted Round-Robin, WRR for short).

If the preset queue scheduling rule is SP, the TM module dequeues packets in a high-priority queue before dequeuing packets in a low-priority queue. For example, if network performance requirements of packets buffered in the first queue of the network device 102 are relatively high (that is, the first queue is a high-priority queue), and network performance requirements of packets buffered in the second queue are relatively low (that is, the second queue is a low-priority queue), the network device 102 dequeues the packets in the second queue only after dequeuing all the packets (including the first packet) in the first queue.

If the preset queue scheduling rule is RR, dequeuing operations are performed on all queues based on a ratio 1:1 of outbound rates. In this case, to process packets with different network performance requirements differently, different CIRs may be set for different queues to ensure a difference in queue priorities. For example, the network device 102 includes a first queue and a second queue corresponding to an interface 3. If a total queue scheduling bandwidth corresponding to the RR is 8 gigabits per second (English: Gb/s) (for example, may be a total bandwidth of the interface 3 or 80% of a total bandwidth of the interface 3), it is required that a maximum CIR allowed to be set for the first queue and the second queue should be 4 Gb/s. However, because a packet with a relatively high network performance requirement needs to be buffered in the first queue, and a packet with a relatively low network performance requirement needs to be buffered in the second queue, a CIR of the first queue may be set to 4 Gb/s, and a CIR of the second queue may be set to 2 Gb/s. In this way, proper scheduling of resources of the network device 102 can be ensured.

If the preset queue scheduling rule is WRR, dequeuing operations are performed on all queues based on a preset ratio of outbound rates. In this case, network performance requirements corresponding to different packets can be met by setting a preset ratio. For example, the network device 102 includes a first queue and a second queue corresponding to an interface 3. If a packet with a relatively high network performance requirement needs to be buffered in the first queue and a packet with a relatively low network performance requirement needs to be buffered in the second queue, the preset ratio may be set to 3:1. Assuming that a total queue scheduling bandwidth corresponding to the WRR is 8 Gb/s, an outbound rate of the first queue is 6 Gb/s, and a CIR of the second queue is 2 Gb/s. In this way, proper scheduling of resources of the network device 102 can be ensured.

It should be noted that, based on the method 100, the network device 102 may further process another received packet. For example, for a received second packet, the network device 102 may also obtain second network cost information of the second packet, where the second network cost information is used to indicate a cost for transmitting the second packet to an egress node. Then the network device 102 determines a second queue for the second packet based on the second network cost information, and buffers the second packet to the second queue. When the cost for transmitting the first packet to the egress node is higher than the cost for transmitting the second packet to the egress node, it indicates that the first packet needs to be allocated to a queue with a relatively high outbound rate, and that the second packet needs to be allocated to a queue with a relatively low outbound rate, that is, an outbound rate of the first queue is higher than an outbound rate of the second queue. Conversely, when the cost for transmitting the first packet to the egress node is lower than the cost for transmitting the second packet to the egress node, it indicates that the first packet needs to be allocated to a queue with a relatively low outbound rate, and that the second packet needs to be allocated to a queue with a relatively high outbound rate, that is, the outbound rate of the first queue is lower than the outbound rate of the second queue.

It can be learned that, by using the method 100, when receiving a to-be-forwarded packet, the network device can determine, based on network cost information of the packet, a queue corresponding to the to-be-forwarded packet, and buffer the to-be-forwarded packet to the determined queue, where the network cost information is used to indicate a cost for transmitting the packet to the egress node. Because the network cost information can reflect the cost for transmitting the packet to the egress node, the network device performs differentiated enqueuing operations considering values of costs, to buffer a packet with a relatively high cost to a queue with a relatively high outbound rate, and buffer a packet with a relatively low cost to a queue with a relatively low outbound rate. Therefore, proper resource scheduling can be implemented, and network performance requirements of the packets are met as far as possible.

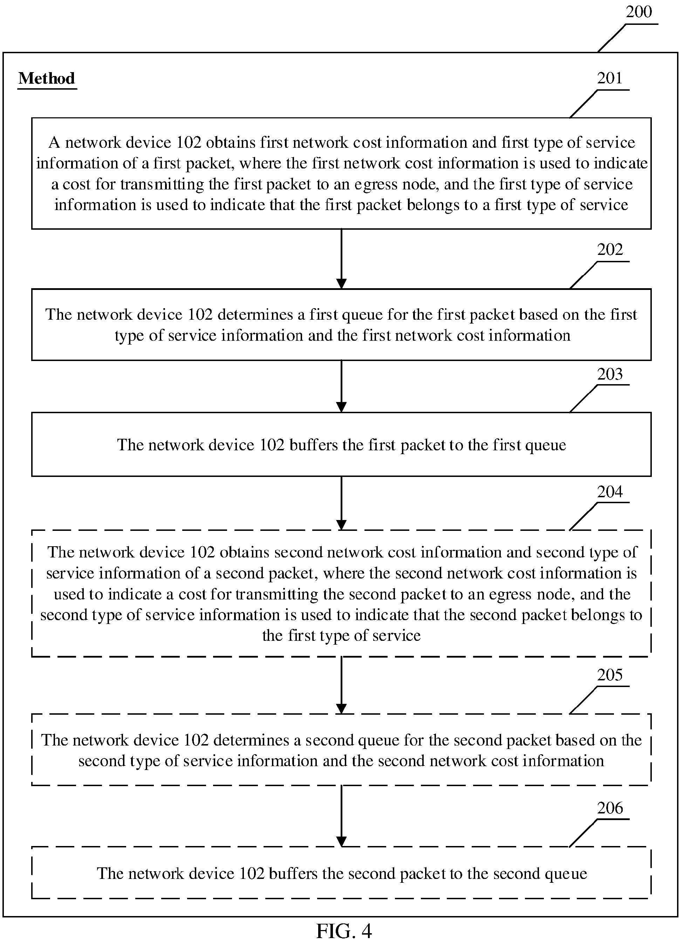

FIG. 4 is a schematic flowchart of another packet processing method 200 according to an embodiment of this application. Refer to FIG. 4. In comparison between the method 200 and the method 100, in the method 200, for packet enqueuing processing, a network device not only considers network cost information, but also divides a queue into a plurality of different queues for a type of service with reference to type of service information based on different network cost information, so that resource scheduling is implemented in a more refined manner. An example in which the network device is the network device 102 in the network 10 is used for description. In a specific implementation, the method 200 may include, for example, the following S201 to S206.

S201: The network device 102 obtains first network cost information and first type of service information of a first packet, where the first network cost information is used to indicate a cost for transmitting the first packet to an egress node, and the first type of service information is used to indicate that the first packet belongs to a first type of service.

For a specific implementation in which the network device 102 obtains the network cost information of the first packet and an achieved effect, refer to related descriptions in S101 in the foregoing method 100.

The type of service information of the first packet is used to represent the type of service of the first packet. In an example, the first type of service information may include a differentiated services code point (English: Differentiated services code point, DSCP for short) value of the first packet. In this case, the network device 102 may determine, based on the DSCP value, the type of service of the first packet in which the DSCP value is located. If the DSCP value is larger, it may be considered that the type of service corresponding to the first packet in which the DSCP value is located is more important. For example, a DSCP value of a protocol packet is the largest. If importance of a voice service is higher than that of a video service, a DSCP value carried in a voice service packet may be greater than a DSCP value carried in a video service packet. In another example, the first type of service information may include a DSCP value of the first packet and a user identifier. In this case, the network device 102 may determine the type of service of the first packet based on the DSCP value and the user identifier.

It should be noted that the DSCP value may be carried in a type of service (English: type of service, TOS for short) field of the first packet. The network device 102 may obtain the DSCP value from the TOS field of the first packet. The user identifier may be determined based on an interface through which the network device 102 receives the first packet.

S202: The network device 102 determines a first queue for the first packet based on the first type of service information and the first network cost information.

In a specific implementation, the network device 102 may determine the first queue from all local queues based on the first type of service information and the first network cost information, where the first queue corresponds to the first type of service information and the first network cost information. For example, the network device 102 may combine the first type of service information and the first network cost information into first matching information based on a preset order, and determine the corresponding first queue based on the first matching information, where each queue corresponds to one piece of matching information including type of service information and network cost information. For another example, the network device 102 may first determine, from all queues based on the first type of service information, at least one queue corresponding to the first type of service information, and then determine, from the determined at least one queue based on the first network cost information, the first queue corresponding to the first network cost information. For another example, the network device 102 may first determine, from all queues based on the first network cost information, at least one queue corresponding to the first network cost information, and then determine, from the determined at least one queue based on the first type of service information, the first queue corresponding to the first type of service information.

S203: The network device 102 buffers the first packet to the first queue.

It should be noted that, for a specific implementation of the S203 and an achieved effect, refer to related descriptions in S103 in the foregoing method 100.

By performing the foregoing S201 to S203, the network device can determine, based on the network cost information and the type of service information of the packet, the queue corresponding to the to-be-forwarded packet, and buffer the to-be-forwarded packet to the determined queue. Therefore, a queue corresponding to each type of service can be divided with reference to a cost for transmitting a packet to the egress node. The network device performs differentiated enqueuing operations on packets of a same type of service considering values of costs, to buffer a packet with a relatively high cost to a queue with a relatively high outbound rate corresponding to the type of service, and buffer a packet with a relatively low cost to a queue with a relatively low outbound rate corresponding to the type of service. Therefore, proper resource scheduling can be implemented for different packets of each type of service based on different network costs, and network performance requirements of the packets are met as far as possible.

In some possible implementations, if the network device 102 obtains two different queues through division for the first type of service: the first queue and a second queue, for a second packet received by the network device 102 and belonging to the same type of service as the first packet, this embodiment of this application may further include the following steps.

S204: The network device 102 obtains second network cost information and second type of service information of the second packet, where the second network cost information is used to indicate a cost for transmitting the second packet to an egress node, and the second type of service information is used to indicate that the second packet belongs to the first type of service.

S205: The network device 102 determines the second queue for the second packet based on the second type of service information and the second network cost information.

S206: The network device 102 buffers the second packet to the second queue.

It should be noted that, for a specific implementation of the foregoing S204 to S206 and an achieved effect, refer to related descriptions in the foregoing S201 to S203.

For example, in the network 10 shown in FIG. 1, the network device 102 receives the first packet and the second packet from the network device 101, where outbound interfaces of the first packet and the second packet are both the interface 3, the egress node of the first packet is the network device 107, and the egress node of the second packet is the network device 105. The type of service information is a DSCP value, the first packet carries a DSCP value 1, and the second packet carries a DSCP value 2. The network device 102 plans the first queue and the second queue for the first type of service, where the first queue is used to buffer a packet at a high cost level, and the second queue is used to buffer a packet at a low cost level. A metric of a path between every two adjacent network devices is 10.

It is assumed that the metric of the path from the network device 102 to the egress node is greater than or equal to 25, corresponding to a high cost level; or conversely, the metric of the path from the network device 102 to the egress node is less than 25, corresponding to a low cost level.

In one case, if the network device 102 stores the routing table 1 shown in Table 1, for example, this embodiment may include: S11: The network device 102 obtains the DSCP value 1 of the first packet, and determines, based on a result of matching between a destination address of the first packet and Table 1, that a metric 1 from the network device 102 to the network device 107 is equal to 30. S12: The network device 102 determines, based on the metric 1 and a cost level definition manner, that the first network cost information of the first packet is the high cost level. S13: The network device 102 determines, based on the DSCP value 1, that the first packet belongs to the first type of service, thereby selecting, from the first queue and the second queue corresponding to the first type of service, the first queue corresponding to the high cost level. S14: The network device 102 buffers the first packet to the first queue. Likewise, for the second packet, this embodiment may include: S16: The network device 102 obtains the DSCP value 2 of the second packet, and determines, based on a result of matching between a destination address of the second packet and Table 1, that a metric 2 from the network device 102 to the network device 105 is equal to 10. S17: The network device 102 determines, based on the metric 2 and a cost level definition manner, that the second network cost information of the second packet is the low cost level. S18: The network device 102 determines, based on the DSCP value 2, that the second packet belongs to the first type of service, thereby selecting, from the first queue and the second queue corresponding to the first type of service, the second queue corresponding to the low cost level. S19: The network device 102 buffers the second packet to the second queue.

In another case, if the network device 102 stores the routing table 2 shown in Table 2, this embodiment may include: S21: The network device 102 obtains the DSCP value 1 of the first packet, and determines, based on a result of matching between a destination address of the first packet and Table 2, that the first network cost information of the first packet is the high cost level. S22: The network device 102 determines, based on the DSCP value 1, that the first packet belongs to the first type of service, thereby selecting, from the first queue and the second queue corresponding to the first type of service, the first queue corresponding to the high cost level. S23: The network device 102 buffers the first packet to the first queue. Likewise, for the second packet, this embodiment may include: S24: The network device 102 obtains the DSCP value 2 of the second packet, and determines, based on a result of matching between a destination address of the second packet and Table 2, that the second network cost information of the second packet is the low cost level. S25: The network device 102 determines, based on the DSCP value 2, that the second packet belongs to the first type of service, thereby selecting, from the first queue and the second queue corresponding to the first type of service, the second queue corresponding to the low cost level. S26: The network device 102 buffers the second packet to the second queue.

It is assumed that a metric of a path from the ingress node to the egress node is greater than or equal to 35, corresponding to a high cost level; or conversely, a metric of a path from the ingress node to the egress node is less than 35, corresponding to a low cost level. In addition, the first packet carries a high cost level identifier corresponding to a metric 3 = 40 of the path from the ingress node to the egress node at the network device 101 (that is, the ingress node). The second packet carries a low cost level identifier corresponding to a metric 4 = 20 of the path from the ingress node to the egress node at the network device 101 (that is, the ingress node).

In an embodiment, for example, that the network device 102 processes the first packet may include: S31: The network device 102 obtains the DSCP value 1 of the first packet and the high cost level identifier, and determines that the first network cost information of the first packet is the high cost level. S32: The network device 102 determines, based on the DSCP value 1, that the first packet belongs to the first type of service, thereby selecting, from the first queue and the second queue corresponding to the first type of service, the first queue corresponding to the high cost level. S33: The network device 102 buffers the first packet to the first queue. Likewise, for the second packet, this embodiment may include: S34: The network device 102 obtains the DSCP value 2 of the second packet and the low cost level identifier, and determines that the second network cost information of the second packet is the low cost level. S35: The network device 102 determines, based on the DSCP value 2, that the second packet belongs to the first type of service, thereby selecting, from the first queue and the second queue corresponding to the first type of service, the second queue corresponding to the low cost level. S36: The network device 102 buffers the second packet to the second queue.

For example, in the network 10 shown in FIG. 1, the network device 106 receives the first packet and a fourth packet from the network device 101, and outbound interfaces are the same interface. The type of service information is a DSCP value, the first packet carries a DSCP value 1, and the fourth packet carries a DSCP value 4. The network device 106 plans a third queue and a fourth queue for the first type of service, where the third queue is used to buffer a packet at a high cost level, and the fourth queue is used to buffer a packet at a low cost level. A metric of a path between every two adjacent network devices is 10. It is assumed that a sum of a metric of a path from the network device 106 to the egress node and a metric of a path passed through during transmission is greater than or equal to 45, corresponding to a high cost level; or conversely, a sum of a metric of a path from the network device 106 to the egress node and a metric of a path passed through during transmission is less than 45, corresponding to a low cost level. An egress node of the first packet is the network device 107, and a destination device of the second packet is a host h4 (not shown in FIG. 1) connected to a network device 108 (not shown in FIG. 1). The network device 108 is an egress node of the second packet, and the network device 108 is directly connected to the network device 107.

In an embodiment, for example, that the network device 106 processes the first packet may include: S41: The network device 106 obtains the DSCP value 1 and a metric 3 = 30 of the first packet, and determines, based on a result of matching between a destination address of the first packet and Table 3, that a metric 4 from the network device 106 to the network device 107 is equal to 10, where the metric 3 is a metric of a path passed through from the network device 101 to the network device 106. S42: The network device 106 calculates a sum of the metric 3 and the metric 4 to obtain a metric 5 = 40, and determines, based on the metric 5 and a cost level definition manner, that the first network cost information of the first packet is the low cost level. S43: The network device 106 determines, based on the DSCP value 1, that the first packet belongs to the first type of service, thereby selecting, from the third queue and the fourth queue corresponding to the first type of service, the fourth queue corresponding to the low cost level. S44: The network device 106 buffers the first packet to the fourth queue. In addition, after the first packet is dequeued from the fourth queue, the network device 106 may further update the metric 3 carried in the first packet to a metric 6 = 40, and then send the first packet to the network device 107.

**Table 3 Routing table 3**

| Routing prefix (prefix) | Next hop (next hop) | Metric (metric) |
|---|---|---|
| h3 | Interface 2 | 10 |
| h4 | Interface 2 | 20 |

Likewise, for example, that the network device 106 processes the second packet may include: S45: The network device 106 obtains the DSCP value 4 and a metric 3 = 30 of the fourth packet, and determines, based on a result of matching between a destination address of the fourth packet and Table 3, that a metric 7 from the network device 106 to the network device 108 is equal to 20. S46: The network device 106 calculates a sum of the metric 3 and the metric 7 to obtain a metric 8 = 50, and determines, based on the metric 8 and a cost level definition manner, that fourth network cost information of the fourth packet is the high cost level. S47: The network device 106 determines, based on the DSCP value 4, that the fourth packet belongs to the first type of service, thereby selecting, from the third queue and the fourth queue corresponding to the first type of service, the third queue corresponding to the high cost level. S48: The network device 106 buffers the fourth packet to the third queue. In addition, after the fourth packet is dequeued from the third queue, the network device 106 may further send the fourth packet to the network device 107, and before the network device 107 performs an enqueuing operation on the fourth packet, the metric 3 carried in the fourth packet is updated to a metric 9 = 40.

In this way, because the network device 106 comprehensively considers the type of service to which the packet belongs, the metric of the path from the network device 106 to the egress node, and the metric of the path through which the packet has passed when the packet arrives at the network device 106, the packet is allocated to a queue with a proper outbound rate, so that a network performance requirement of the packet is met.

According to the description of the method 200 and the corresponding embodiment, it can be learned that, in this embodiment of this application, the queue corresponding to each type of service can be divided with reference to the cost for transmitting the packet to the egress node and the type of service of the packet, and when the received packet is processed, a packet with a relatively high cost can be buffered to a queue with a relatively high outbound rate corresponding to the type of service, and a packet with a relatively low cost can be buffered to a queue with a relatively low outbound rate corresponding to the type of service. Therefore, proper resource scheduling can be implemented for different packets of each type of service based on different network costs, and it is possible to meet network performance requirements of the packets.

Based on the foregoing method embodiment, an embodiment of this application further provides a packet processing apparatus. The following describes the apparatus with reference to an accompanying drawing.

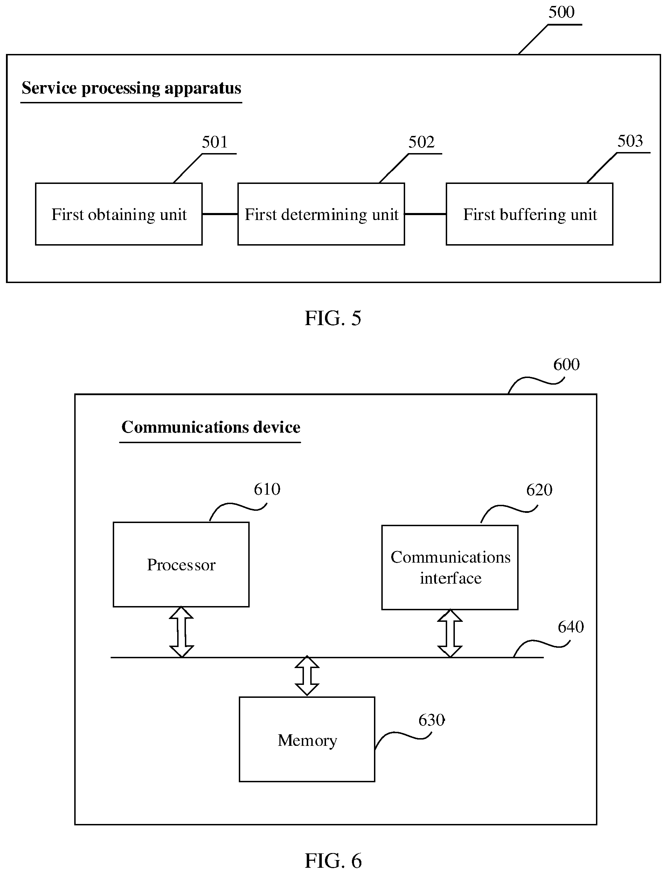

FIG. 5 is a schematic diagram of a structure of a packet processing apparatus 500 according to an embodiment of this application. The apparatus 500 may be applied to a network device, for example, may be applied to a network device 102 to perform the method 100 shown in FIG. 3. The apparatus 500 may include a first obtaining unit 501, a first determining unit 502, and a first buffering unit 503.

The first obtaining unit 501 is configured to obtain first network cost information of a first packet, where the first network cost information is used to indicate a cost for transmitting the first packet to an egress node.

For a specific implementation of the first obtaining unit 501, refer to the detailed description of S101 in the embodiment in FIG. 3.

The first determining unit 502 is configured to determine a first queue for the first packet based on the first network cost information.

For a specific implementation of the first determining unit 502, refer to the detailed description of S102 in the embodiment in FIG. 3.

The first buffering unit 503 is configured to buffer the first packet to the first queue.

For a specific implementation of the first buffering unit 503, refer to the detailed description of S103 in the embodiment in FIG. 3.

In a possible implementation, the apparatus 500 further includes a second determining unit. The second determining unit is configured to: before the first network cost information of the first packet is obtained, determine that congestion occurs. For a description of obtaining the first network cost information of the first packet only after congestion is determined, refer to the detailed description of S101.

In a possible implementation, the apparatus 500 may further include a second obtaining unit. The second obtaining unit is configured to obtain first type of service information of the first packet, where the first type of service information is used to indicate that the first packet belongs to a first type of service. The first determining unit 502 is specifically configured to determine the first queue for the first packet based on the first type of service information and the first network cost information. The first type of service information may include a DSCP value of the first packet. Alternatively, the first type of service information may include a DSCP value of the first packet and a user identifier corresponding to the first packet. For descriptions of processing the packet based on the type of service information and the network cost information, refer to detailed descriptions of S201 to S203 in the method 200 shown in FIG. 4.

In a possible implementation, the first obtaining unit 501 may include a first determining subunit and a first obtaining subunit. The first determining subunit is configured to determine a first routing entry based on a destination address of the first packet, where the first routing entry includes a first routing prefix and a first metric (metric) of a first path from the network device to the egress node, and the destination address of the first packet matches the first routing prefix. The first obtaining subunit is configured to obtain the first network cost information based on the first metric in the first routing entry. In an example, the first network cost information is the first metric, and the first determining unit 502 is specifically configured to: if determining that the first metric is greater than a first threshold, determine the first queue for the first packet, where the first queue corresponds to the first threshold.

In a possible implementation, the first obtaining unit 501 may include a second determining subunit and a second obtaining subunit. The second determining subunit is configured to determine a first routing entry based on a destination address of the first packet, where the first routing entry includes a first routing prefix and a first cost level corresponding to a first metric (metric) of a first path from the network device to the egress node, and the destination address of the first packet matches the first routing prefix. The second obtaining subunit is configured to obtain the first network cost information based on the first cost level in the first routing entry. In an example, the first network cost information is the first cost level corresponding to the first metric, and the first determining unit 502 is specifically configured to determine the first queue for the first packet based on the first cost level, where the first queue corresponds to the first cost level.

In a possible implementation, the network device is an intermediate node through which the first packet is transmitted, and the first obtaining unit 501 may include a third obtaining subunit, a third determining subunit, and a fourth obtaining subunit. The third obtaining subunit is configured to obtain a second metric from the first packet, where the second metric is a metric of a second path through which the first packet is transmitted from an ingress node to the network device. The third determining subunit is configured to determine a first routing entry in a routing table based on a destination address of the first packet, where the first routing entry includes a first routing prefix and a first metric of a first path from the network device to the egress node, and the destination address of the first packet matches the first routing prefix. The fourth obtaining subunit is configured to obtain the first network cost information based on the second metric and the first metric. In an example, the first network cost information is a third metric, the third metric is a sum of the first metric and the second metric, and the first determining unit 502 is specifically configured to: if determining that the third metric is greater than a second threshold, determine the first queue for the first packet, where the first queue corresponds to the second threshold. In another example, the first network cost information is a second cost level corresponding to a third metric, the third metric is a sum of the first metric and the second metric, and the first determining unit 502 is specifically configured to determine the first queue for the first packet based on the second cost level, where the first queue corresponds to the second cost level. In this implementation, the apparatus 500 may further include an updating unit and a sending unit. The updating unit is configured to: when the first packet is dequeued from the first queue, update the second metric in the first packet to a fourth metric to obtain a third packet, where the fourth metric is a metric of a third path through which the first packet is transmitted from the ingress node to a next-hop node of the network device. The sending unit is configured to send the third packet to the next-hop node of the network device.

In a possible implementation, the first obtaining unit 501 may include a fifth obtaining subunit and a sixth obtaining subunit. The fifth obtaining subunit is configured to obtain a fifth metric from the first packet, where the fifth metric is a metric corresponding to a fourth path from an ingress node of the first packet to the egress node of the first packet, and the fifth metric is added to the first packet by the ingress node of the first packet. The sixth obtaining subunit is configured to obtain the first network cost information based on the fifth metric. In an example, the first network cost information is the fifth metric, and the first determining unit 502 is specifically configured to: if determining that the fifth metric is greater than a third threshold, determine the first queue for the first packet, where the first queue corresponds to the third threshold. In another example, the first network cost information is a third cost level corresponding to the fifth metric, and the first determining unit 502 is specifically configured to determine the first queue for the first packet based on the third cost level, where the first queue corresponds to the third cost level.

In a possible implementation, the first obtaining unit 501 may include a seventh obtaining subunit and an eighth obtaining subunit. The seventh obtaining subunit is configured to obtain a third cost level from the first packet, where the third cost level corresponds to a metric corresponding to a fourth path from an ingress node of the first packet to the egress node of the first packet, and the third cost level is added to the first packet by the ingress node of the first packet. The eighth obtaining subunit is configured to obtain the first network cost information based on the third cost level. The first network cost information is the third cost level, and the first determining unit 502 is specifically configured to determine the first queue for the first packet based on the third cost level, where the first queue corresponds to the third cost level.

In a possible implementation, the first obtaining unit 501 may include a ninth obtaining subunit and a tenth obtaining subunit. The ninth obtaining subunit is configured to obtain, from the first packet, a quantity of devices included in a fourth path from an ingress node of the first packet to the egress node of the first packet, where the quantity of devices is added to the first packet by the ingress node of the first packet. The tenth obtaining subunit is configured to obtain the first network cost information based on the quantity of devices. In an example, the first network cost information is the quantity of devices, and the first determining unit 502 is specifically configured to: if determining that the quantity of devices is greater than a fourth threshold, determine the first queue for the first packet, where the first queue corresponds to the fourth threshold. In another example, the first network cost information is a fourth cost level corresponding to the quantity of devices, and the first determining unit 502 is specifically configured to determine the first queue for the first packet based on the fourth cost level, where the first queue corresponds to the fourth cost level.

In a possible implementation, the first obtaining unit 501 may include an eleventh obtaining subunit and a twelfth obtaining subunit. The eleventh obtaining subunit is configured to obtain a fourth cost level from the first packet, where the fourth cost level corresponds to a quantity of devices included in a fourth path from an ingress node of the first packet to the egress node of the first packet, and the fourth cost level is added to the first packet by the ingress node of the first packet. The twelfth obtaining subunit is configured to obtain the first network cost information based on the fourth cost level. In an example, the first network cost information is the fourth cost level, and the first determining unit 502 is specifically configured to determine the first queue for the first packet based on the fourth cost level, where the first queue corresponds to the fourth cost level.

For related descriptions in the foregoing implementations, refer to detailed descriptions in S101 and S102 in the method 100.

In a possible implementation, the apparatus 500 may further include a third obtaining unit, a third determining unit, and a second buffering unit. The third obtaining unit is configured to obtain second network cost information of a second packet, where the second network cost information is used to indicate a cost for transmitting the second packet to an egress node, and the first packet and the second packet belong to the same type of service. The third determining unit is configured to determine a second queue for the second packet based on the second network cost information, where the first queue and the second queue correspond to the same type of service. The second buffering unit is configured to buffer the second packet to the second queue. When the cost for transmitting the first packet to the egress node is higher than the cost for transmitting the second packet to the egress node, an outbound rate of the first queue is higher than an outbound rate of the second queue; or when the cost for transmitting the first packet to the egress node is lower than the cost for transmitting the second packet to the egress node, an outbound rate of the first queue is lower than an outbound rate of the second queue. For descriptions of processing the second packet, refer to detailed descriptions of S204 to S206 in the method 200 shown in FIG. 4.

The first network cost information is related to at least one piece of the following information: a delay in transmitting the first packet to the egress node, a bandwidth, or a packet loss rate.

For specific functions that can be executed by the packet processing apparatus 500 and implementations thereof, refer to corresponding descriptions about the network device 102 in the method 100 shown in FIG. 3 and the method 200 shown in FIG. 4. Details are not described herein again.

FIG. 6 is a schematic diagram of a structure of a communications device 600 according to an embodiment of this application. The communications device 600 may be, for example, the network device 102 in the embodiment shown in FIG. 3, or may be a device implementation of the packet processing apparatus 500 in the embodiment shown in FIG. 5.

Refer to FIG. 6. The communications device 600 includes a processor 610, a communications interface 620, and a memory 630. There may be one or more processors 610 in the communications device 600. One processor is used as an example in FIG. 6. In this embodiment of this application, the processor 610, the communications interface 620, and the memory 630 may be connected by using a bus system or in another manner. In FIG. 6, for example, a bus system 640 is used for connection.

The processor 610 may be a CPU, an NP, or a combination of a CPU and an NP. The processor 610 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The communications interface 620 is configured to receive and send packets. Specifically, the communications interface 620 may include a receiving interface and a sending interface. The receiving interface may be configured to receive a packet, and the sending interface may be configured to send a packet. There may be one or more communications interfaces 620.

The memory 630 may include a volatile memory (English: volatile memory), for example, a random access memory (random access memory, RAM). The memory 630 may also include a non-volatile memory (English: non-volatile memory), for example, a flash memory (English: flash memory), a hard disk drive (hard disk drive, HDD), or a solid-state drive (solid-state drive, SSD). The memory 630 may further include a combination of the foregoing types of memories. The memory 630 may store, for example, the first network cost information mentioned above.

Optionally, the memory 630 stores an operating system and a program, an executable module or a data structure, or a subset thereof, or an extended set thereof. The program may include various operation instructions, and is used to implement various operations. The operating system may include various system programs, and is configured to implement various basic services and process hardware-based tasks. The processor 610 may read the program in the memory 630, to implement the packet processing method provided in the embodiment of this application.

The memory 630 may be a storage device in the communications device 600, or may be a storage apparatus independent of the communications device 600.

The bus system 640 may be a peripheral component interconnect (peripheral component interconnect, PCI) bus, an extended industry standard architecture (extended industry standard architecture, EISA) bus, or the like. The bus system 640 may be classified into an address bus, a data bus, a control bus, and the like. For ease of representation, only one thick line is used to represent the bus in FIG. 6, but this does not mean that there is only one bus or only one type of bus.

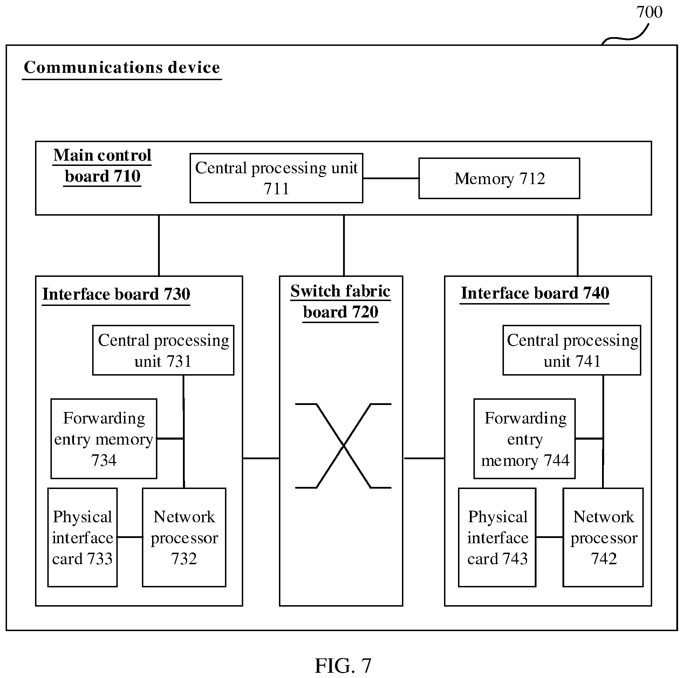

FIG. 7 is a schematic diagram of a structure of another communications device 700 according to an embodiment of this application. The communications device 700 may be configured as the network device 102 in the foregoing embodiment or a device implementation of the packet processing apparatus 500 in the embodiment shown in FIG. 5.

The communications device 700 includes a main control board 710 and an interface board 730.

The main control board 710 is also referred to as a main processing unit (main processing unit, MPU) or a route processing card (route processor card). The main control board 710 performs control and management on components of the communications device 700, including functions of route calculation, device management, device maintenance, and protocol processing. The main control board 710 includes a central processing unit 711 and a memory 712.

The interface board 730 is also referred to as a line interface processing unit (line processing unit, LPU), a line card (line card), or a service board. The interface board 730 is configured to provide various service interfaces and implement data packet forwarding. The service interface includes but is not limited to an Ethernet interface, a POS (Packet over SONET/SDH) interface, and the like. The Ethernet interface is, for example, a flexible Ethernet service interface (Flexible Ethernet Client, FlexE Client). The interface board 730 includes a central processing unit 731, a network processor 732, a forwarding entry memory 734, and a physical interface card (physical interface card, PIC) 733.

The central processing unit 731 on the interface board 730 is configured to control and manage the interface board 730 and communicate with the central processing unit 711 on the main control board 710.

The network processor 732 is configured to implement packet forwarding processing. A form of the network processor 732 may be a forwarding chip. Specifically, processing of an uplink packet includes packet processing on an inbound interface and forwarding table lookup; and processing of a downlink packet includes forwarding table lookup, and the like.

The physical interface card 733 is configured to implement a physical layer interconnection function. Original traffic enters the interface board 730 from the physical interface card 733, and processed packets are sent out from the physical interface card 733. The physical interface card 733 includes at least one physical interface. The physical interface card 733 corresponds to a FlexE physical interface in a system architecture. The physical interface card 733, also referred to as a subcard, may be mounted on the interface board 730, and is responsible for converting an optical/electrical signal into a packet, performing validity check on the packet, and then forwarding the packet to the network processor 732 for processing. In some embodiments, the central processing unit 731 on the interface board 730 may also perform a function of the network processor 732, for example, implement software-based forwarding based on a general-purpose CPU, so that the network processor 732 is not required in the physical interface card 733.

Optionally, the communications device 700 includes a plurality of interface boards. For example, the communications device 700 further includes an interface board 740. The interface board 740 includes a central processing unit 741, a network processor 742, a forwarding entry memory 744, and a physical interface card 743.

Optionally, the communications device 700 further includes a switch fabric board 720. The switch fabric board 720 may also be referred to as a switch fabric unit (switch fabric unit, SFU). When the communications device has a plurality of interface boards 730, the switch fabric board 720 is configured to implement data exchange between the interface boards. For example, the interface board 730 and the interface board 740 may communicate with each other by using the switch fabric board 720.

The main control board 710 is coupled to the interface board 730. For example, the main control board 710, the interface board 730, the interface board 740, and the switch fabric board 720 are connected to a system backplane by using a system bus. In a possible implementation, an inter-process communication protocol (inter-process communication, IPC) channel is established between the main control board 710 and the interface board 730, and communication is performed between the main control board 710 and the interface board 730 by using the IPC channel.

Logically, the communications device 700 includes a control plane and a forwarding plane. The control plane includes the main control board 710 and the central processing unit 731. The forwarding plane includes components that perform forwarding, such as the forwarding entry memory 734, the physical interface card 733, and the network processor 732. The control plane performs functions such as routing, generating a forwarding table, processing signaling and a protocol packet, and configuring and maintaining a device status. The control plane delivers the generated forwarding table to the forwarding plane. At the forwarding plane, by performing table lookup based on the forwarding table delivered by the control plane, the network processor 732 forwards packets received by the physical interface card 733. The forwarding table delivered by the control plane may be stored in the forwarding entry memory 734. In some embodiments, the control plane and the forwarding plane may be completely separate and are not on the same device.

If the communications device 700 is configured as the network device 102, the central processing unit 711 may obtain first network cost information of a first packet, determine a first queue for the first packet based on the first network cost information, and buffer the first packet to a first queue. The network processor 732 may trigger the physical interface card 733 to send the dequeued first packet to a next-hop node.

If the communications device 700 is configured as the network device 105, the network processor 732 may trigger the physical interface card 733 to receive a first packet sent by the network device 105.

It should be understood that the sending unit and the like in the packet processing apparatus 500 may be equivalent to the physical interface card 733 or the physical interface card 743 in the communications device 700; and the obtaining unit 501, the determining unit 502, and the like in the packet processing apparatus 500 may be equivalent to the central processing unit 711 or the central processing unit 731 in the communications device 700.

It should be understood that, in this embodiment of this application, an operation on the interface board 740 is consistent with an operation on the interface board 730. For brevity, details are not described again. It should be understood that the communications device 700 in this embodiment may correspond to the network device 102 in the foregoing method embodiment. The main control board 710, the interface board 730, and/or the interface board 740 in the communications device 700 may implement functions and/or various steps performed by the network device in the foregoing method embodiment. For brevity, details are not described herein again.

It should be understood that there may be one or more main control boards. When there are a plurality of main control boards, an active main control board and a standby main control board may be included. There may be one or more interface boards. A data processing capability of the communications device is higher if more interface boards are provided. There may be one or more physical interface cards on the interface board. There may be no switch fabric board, or there may be one or more switch fabric boards. If there are a plurality of switch fabric boards, load sharing and redundancy backup can be implemented. In a centralized forwarding architecture, the communications device may not require a switch fabric board, and the interface board has a function for processing service data of the entire system. In a distributed forwarding architecture, the communications device may have at least one switch fabric board, and data exchange between a plurality of interface boards is implemented by using the switch fabric board, thereby providing a large data exchange capacity and a high processing capability. Therefore, a data access and processing capability of a communications device in the distributed architecture is higher than that of a device in the centralized architecture. Optionally, the communications device may also be in a form with only one board, that is, there is no switch fabric board, and functions of the interface board and the main control board are integrated into the board. In this case, the central processing unit on the interface board and the central processing unit on the main control board may be combined into one central processing unit on the board to perform the functions of the two combined boards. Therefore, the data exchange and processing capability of the device in this form is relatively low (for example, a communications device such as a low-end switch or router). The specific architecture depends on a specific networking deployment scenario.

In some possible embodiments, each network device in FIG. 1 may be implemented as a virtualized device. For example, the virtualized device may be a virtual machine (English: Virtual Machine, VM) that runs a program for sending a packet, and the virtual machine is deployed on a hardware device (for example, a physical server). The virtual machine is a complete computer system that is simulated by software and has complete hardware system functions and runs in a completely isolated environment. The virtual machine may be configured as each network device in FIG. 1. For example, each network device in FIG. 1 may be implemented based on a general-purpose physical server in combination with a network functions virtualization (Network Functions Virtualization, NFV) technology. Each network device in FIG. 1 is a virtual host, a virtual router, or a virtual switch. A person skilled in the art may virtualize, on a general-purpose physical server by reading this application with reference to the NFV technology, each network device that has the foregoing functions in FIG. 1. Details are not described herein again.

It should be understood that the communications devices in the foregoing product forms respectively have any functions of the network devices in FIG. 1 in the foregoing method embodiment. Details are not described herein again.

An embodiment of this application further provides a chip, including a processor and an interface circuit. The interface circuit is configured to receive instructions and transmit the instructions to the processor. The processor may be, for example, a specific implementation form of the packet processing apparatus 500 shown in FIG. 5, and may be configured to perform the foregoing packet processing method. The processor is coupled to a memory, the memory is configured to store a program or instructions, and when the program or the instructions is/are executed by the processor, the chip is enabled to implement the method in any one of the foregoing method embodiments.

Optionally, there may be one or more processors in the chip. The processor may be implemented by using hardware or by using software. When implemented by using hardware, the processor may be a logic circuit, an integrated circuit, or the like. When implemented by using software, the processor may be a general-purpose processor, and is implemented by reading software code stored in the memory.

Optionally, there may be one or more memories in the chip. The memory may be integrated with the processor, or may be disposed separately from the processor. This is not limited in this application. For example, the memory may be a non-transitory memory, for example, a read-only memory ROM. The memory and the processor may be integrated on a same chip, or may be separately disposed on different chips. A type of the memory and a manner of disposing the memory and the processor are not specifically limited in this application.

For example, the chip may be a field programmable gate array (field programmable gate array, FPGA), may be an application-specific integrated circuit (application-specific integrated circuit, ASIC), or may be a system on chip (system on chip, SoC). The chip may be a central processing unit (central processing unit, CPU), may be a network processor (network processor, NP), may be a digital signal processing circuit (digital signal processor, DSP), or may be a micro controller (micro controller unit, MCU), or may be a programmable logic device (programmable logic device, PLD) or another integrated chip.

An embodiment of this application further provides a computer-readable storage medium, including instructions or a computer program. When the instructions or the computer program are/is run on a computer, the computer is enabled to perform the packet processing method provided in the foregoing embodiment.

An embodiment of this application further provides a computer program product including instructions or a computer program. When the instructions or the computer program are/is run on a computer, the computer is enabled to perform the packet processing method provided in the foregoing embodiment.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of this application described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into units is merely logical service division and may be other division in an actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, service units in the embodiments of this application may be integrated into one processing unit, or each of the units may exist alone physically, or two or more units are integrated into one unit. The integrated unit may be implemented in a form of hardware, or may be implemented in a form of a software service unit.

When the integrated unit is implemented in the form of a software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

A person skilled in the art should be aware that in the foregoing one or more examples, services described in this application may be implemented by hardware, software, firmware, or any combination thereof. When the services are implemented by software, the foregoing services may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and beneficial effects of this application are further described in detail in the foregoing specific embodiments. It should be understood that the foregoing embodiments are merely specific embodiments of this application.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A packet processing method, comprising:
obtaining (101), by a network device, first network cost information of a first packet, wherein the first network cost information is used to indicate a cost for transmitting the first packet to an egress node;
determining (102), by the network device, a first queue for the first packet based on the first network cost information; and
buffering (103), by the network device, the first packet to the first queue.

2. The method according to claim 1, wherein before the obtaining (101), by a network device, first network cost information of a first packet, the method further comprises:
determining, by the network device, that congestion occurs.

3. The method according to claim 1 or 2, wherein the method further comprises:
obtaining, by the network device, first type of service information of the first packet, wherein the first type of service information is used to indicate that the first packet belongs to a first type of service; and
the determining, by the network device, a first queue for the first packet based on the first network cost information comprises:
determining, by the network device, the first queue for the first packet based on the first type of service information and the first network cost information.

4. The method according to claim 3, wherein the first type of service information comprises a differentiated services code point, DSCP, value of the first packet.

5. The method according to claim 4, wherein the first type of service information further comprises a user identifier corresponding to the first packet.

6. The method according to any one of claims 1 to 5, wherein the obtaining (101), by a network device, first network cost information of a first packet comprises:
determining, by the network device, a first routing entry based on a destination address of the first packet, wherein the first routing entry comprises a first routing prefix and a first metric of a first path from the network device to the egress node, and the destination address of the first packet matches the first routing prefix; and
obtaining, by the network device, the first network cost information based on the first metric in the first routing entry.

7. The method according to claim 6, wherein the first network cost information is the first metric, and the determining, by the network device, a first queue for the first packet based on the first network cost information comprises:
if determining that the first metric is greater than a first threshold, determining, by the network device, the first queue for the first packet, wherein the first queue corresponds to the first threshold.

8. The method according to any one of claims 1 to 5, wherein the obtaining (101), by a network device, first network cost information of a first packet comprises:
determining, by the network device, a first routing entry based on a destination address of the first packet, wherein the first routing entry comprises a first routing prefix and a first cost level corresponding to a first metric of a first path from the network device to the egress node, and the destination address of the first packet matches the first routing prefix; and
obtaining, by the network device, the first network cost information based on the first cost level in the first routing entry.

9. The method according to claim 8, wherein the first network cost information is the first cost level corresponding to the first metric, and the determining, by the network device, a first queue for the first packet based on the first network cost information comprises:
determining, by the network device, the first queue for the first packet based on the first cost level, wherein the first queue corresponds to the first cost level.

10. The method according to any one of claims 1 to 5, wherein the network device is an intermediate node through which the first packet is transmitted, and the obtaining (101), by a network device, first network cost information of a first packet comprises:
obtaining, by the network device, a second metric from the first packet, wherein the second metric is a metric of a second path through which the first packet is transmitted from an ingress node to the network device;
determining, by the network device, a first routing entry in a routing table based on a destination address of the first packet, wherein the first routing entry comprises a first routing prefix and a first metric of a first path from the network device to the egress node, and the destination address of the first packet matches the first routing prefix; and
obtaining, by the network device, the first network cost information based on the second metric and the first metric.

11. The method according to claim 10, wherein the first network cost information is a third metric, the third metric is a sum of the first metric and the second metric, and the determining, by the network device, a first queue for the first packet based on the first network cost information comprises:
if determining that the third metric is greater than a second threshold, determining, by the network device, the first queue for the first packet, wherein the first queue corresponds to the second threshold.

12. The method according to claim 10, wherein the first network cost information is a second cost level corresponding to a third metric, the third metric is a sum of the first metric and the second metric, and the determining, by the network device, a first queue for the first packet based on the first network cost information comprises:
determining, by the network device, the first queue for the first packet based on the second cost level, wherein the first queue corresponds to the second cost level.

13. A packet processing apparatus, wherein the apparatus is applied to a network device, and the apparatus comprises:
a first obtaining unit (501), configured to obtain first network cost information of a first packet, wherein the first network cost information is used to indicate a cost for transmitting the first packet to an egress node;
a first determining unit (502), configured to determine a first queue for the first packet based on the first network cost information; and
a first buffering unit (503), configured to buffer the first packet to the first queue.

14. A communications device, wherein the device comprises a processor and a memory, wherein
the memory is configured to store instructions or a computer program; and
the processor is configured to execute the instructions or the computer program in the memory, so that the communications device performs the method according to any one of claims 1 to 12.

15. A computer-readable storage medium, comprising instructions, wherein when the instructions are run on a computer, the computer is enabled to perform the method according to any one of claims 1 to 12.
